Europäisches Patentamt

European Patent Office

Office européen des brevets

(19)

(11) **EP 0 503 096 B1**

(12) **EUROPEAN PATENT SPECIFICATION**

(45) Date of publication and mention
of the grant of the patent:
**27.12.1996 Bulletin 1996/52**

(21) Application number: **91917323.7**

(22) Date of filing: **03.10.1991**

(51) Int Cl.6: **G11B 7/085**, G11B 7/09

(86) International application number:
**PCT/JP91/01334**

(87) International publication number:
**WO 92/06471 (16.04.1992 Gazette 1992/09)**

(54) **BEAM POSITION CONTROL SYSTEM OF OPTICAL DISK DEVICE**

KONTROLLIERSYSTEM DER LICHTSTRAHLPOSITIONIERUNG FÜR OPTISCHES
SCHEIBEGERÄT

SYSTEME DE REGLAGE DE LA POSITION DU FAISCEAU D'UN DISPOSITIF A DISQUE OPTIQUE

(84) Designated Contracting States:
**DE GB**

(30) Priority: **03.10.1990 JP 265719/90**
**03.10.1990 JP 265722/90**
**03.10.1990 JP 265723/90**
**03.10.1990 JP 265724/90**

(43) Date of publication of application:
**16.09.1992 Bulletin 1992/38**

(73) Proprietors:
• **FUJITSU LIMITED**
**Kawasaki-shi, Kanagawa 211 (JP)**
• **Nippon Telegraph and Telephone Corporation**
**Tokyo 100 (JP)**

(72) Inventors:
• **YANAGI, Shigenori Fujitsu Limited**
**Kawasaki-shi Kanagawa 211 (JP)**
• **TAKAYANAGI, Makoto**
**7-104, 4-19, Sekimachi-minami**
**Tokyo 177 (JP)**
• **KATOH, Kikuji**
**Tokorozawa-shi Saitama 359 (JP)**

(74) Representative: **Fane, Christopher Robin King**
**HASELTINE LAKE & CO.**
**Hazlitt House**
**28 Southampton Buildings**
**Chancery Lane**
**London, WC2A 1AT (GB)**

(56) References cited:
**EP-A- 0 387 019** **JP-A-59 500 243**

## Description

This invention relates to a beam position control system of an optical disk unit for emitting a write beam and a read beam onto a medium through an object lens, and particularly, to a beam position control system of an optical disk unit employing a galvanomirror for an independent tracking operation with a read beam or a write beam.

BACKGROUND ART

An optical disk unit passes write and read beams through an object lens, to immediately read (verify) a medium while writing the medium.

In this case, a lens actuator of the optical disk unit moves the write and read beams together to trace a track on the medium, and a galvanomirror drives the read beam to let it follow the track independently of the write beam. Position servo control of the read beam during the independent tracking operation is carried out according to a tracking error signal of the read beam. For suppressing unwanted movements of the galvanomirror due to disturbing vibration, position lock control for maintaining the galvanomirror at a central position is carried out according to a galvanomirror position signal.

Here, a zero point of the tracking error signal does not always agree with a zero point of the galvanomirror position signal. If the position servo control and position lock-control are simultaneously carried out under this condition, opposite forces may be applied to the actuator due to the disagreement of the zero points, to produce a servo reminder (incomplete servo) and a track error after a track jump. It is required, therefore, to properly control the position of the read beam by effectively combining the position servo control according to the tracking error signal and the position lock servo control according to the galvanomirror position signal.

Tension of cables, etc., connected to the galvanomirror causes a stop point of the position lock control to deviate from a zero point of the galvanomirror position signal. Even if a servo gain of the galvanomirror is adjusted in a manufacturing stage such that the write and read beams are positioned on the same track, the gain may change through aging, to change the stop point of the read beam with the position locked galvanomirror during a seek operation. If this happens, the read beam may be positioned at a different track from a track of the write beam after the seek operation. Then, a corrective seek operation must be done for the read beam. It is necessary, therefore, to provide a read beam control system that can maintain an adjusted state of correctly positioning the read beam onto the same track as the write beam after the completion of a seek operation, even if the galvanomirror has a mechanical offset.

If a servo system malfunctions during the tracking control, the galvanomirror will be abnormally deflected to zero the tracking error signal to indicate that there is no track error. In this case, the servo error will never be detected. It is required, therefore, to detect the abnormal deflection of the galvanomirror and carry out a proper restoration process.

The tracking error signal obtained from the read beam in response to the position of the galvanomirror may have an offset, which may cause the read beam to be off-track. It is required, therefore, to remove the offset depending on the position of the galvanomirror.

DISCLOSURE OF THE INVENTION

EP-A-0 387 019 discloses a beam position control system according to the preamble of accompanying claim 1. This control system also includes switches for setting different modes of a servo loop; however, these switches are only applied to the lens servo loop and not to the mirror control loop.

This invention relates to a beam position control system of an optical disk unit for emitting a write beam and a read beam onto a medium through an object lens and carrying out tracking control of the read beam with a direction change means such as a galvanomirror.

An object of the invention is to prevent a tracking error of the read beam due to a conflict between position servo control and position lock control in a beam direction change means such as a galvanomirror, and improve stability against disturbing vibration.

Another object of the invention is to remove a mechanical offset of the galvanomirror and let the read beam correctly follow a seek operation of the write beam, to shorten an access time of the write and read beams.

Still another object of the invention is to detect and deal with an abnormal deflection of the galvanomirror due to a malfunction of a servo system for carrying out the tracking control of the read beam.

A further object of the invention is to remove an offset of a tracking error signal of the read beam, the offset being caused depending on the position of the galvanomirror.

According to the present invention, there is provided a beam position control system of an optical disk unit, comprising:

means for generating a write beam and a read beam directed to a medium by a lens;
an optical head for writing and reading data to and from a medium with beams;
lens drive means for driving an object lens to simultaneously move said beams across tracks of the medium;
first tracking error detection means for providing a first tracking error signal of the write beam;
direction changer drive means for driving a direction change means to move the read beam across the tracks of the medium;
position detection means for detecting the position of the direction change means and providing a position signal; and

second tracking error detection means for detecting a tracking error of the read beam and providing a second tracking error signal according to a read beam returned from the medium;

position servo means generating a first drive signal to drive the direction change means according to the tracking error signal;

position lock means generating a second drive signal for driving and locking the direction change means to a predetermined position according to the position signal; and

means for summing the first and second drive signals, characterised by

a first servo switch for starting and stopping the first drive signal;

a second servo switch for starting and stopping the second drive signal; and

control means for turning ON and OFF the first and second servo switches according to a beam position control status, thereby enabling one of the position servo operation and the position lock operation, both of the position servo operation and the position lock operation, or neither of the position servo operation and the position lock operation.

Preferably, the direction change means is provided by a galvanomirror.

Thus, the basic embodiment of the invention enables one, or both, or none of the position servo control and the position lock control of the galvanomirror, to control the read beam to an optimum position under any of the on-track state, seek state, position setting state after the completion of a seek operation, and positional deviation existing state between the write beam and the read beam.

A second embodiment of the invention locks the position of the galvanomirror when the unit is energized or retried, reads a galvanomirror position signal provided at this moment, finds an offset signal for zeroing the galvanomirror position signal, and adds the offset to the position locked galvanomirror during a seek operation with the write beam, thereby removing an offset of the galvanomirror position signal.

A third embodiment of the invention determines that the galvanomirror has been abnormally deflected due to a malfunction of the tracking control servo system, by detecting an abnormality that a tracking error signal used for the tracking control of the read beam exceeds a threshold value, or an abnormality that a galvanomirror position signal used for locking the galvanomirror at a central position exceeds a threshold value.

A fourth embodiment of the invention removes an offset by adding a galvanomirror position signal to a tracking error signal of the read beam. It is possible to add a lens position signal as well to remove the offset.

Reference is made, by way of example, to the accompanying drawings in which:-

Fig. 1A is a schematic view showing essential parts of an optical head to which the invention may be applied;

Fig. 1B is a schematic view showing the principle of a beam position control system in a first aspect (embodiment) of the invention;

Fig. 2 is a schematic view showing fixed and movable optical systems of the optical head;

Fig.3 is a schematic view showing a head optical system;

Fig. 4 is an exploded view showing a lens actuator;

Fig. 5 is an explanatory view showing a rotary side of the actuator of Fig. 4;

Fig. 6 is a view showing characteristics of a galvanomirror position signal;

Fig. 7 is a general schematic view showing beam position control according to the embodiment of Fig. 1B;

Fig. 8 is a schematic view showing a read servo portion in the system of Fig. 1B;

Fig. 9 is a flowchart showing a control operation of mode 1 in the system of Fig. 1B;

Fig. 10 is a flowchart showing a control operation of mode 2 in the system of Fig.lB;

Fig. 11 is a flowchart showing a control operation of mode 3 in the system of Fig.lB;

Fig. 12 is a flowchart showing a control operation of mode 4 in the system of Fig.lB;

Fig. 13 is a flowchart showing a control operation of mode 5 in the system of Fig.1B;

Figs. 14A and 14B are flowcharts showing a control operation of mode 6 in the system of Fig. lB;

Fig. 15 is a schematic view showing a two-beam optical head according to a prior art;

Fig. 16 is a schematic view showing a conventional system;

Fig. 17 is an explanatory view showing the principle of a beam position control system in a second aspect (embodiment) of the invention;

Fig. 18 is a schematic view showing read servo control portion according to an embodiment of the system of Fig. 17;

Fig. 19 is a flowchart showing a galvanomirror offset adjusting process according to the system of Fig. 17;

Fig. 20 is a schematic view showing another embodiment of the system of Fig. 17;

Fig. 21 is an explanatory view showing the principle of a position control system in a third aspect (embodiment) of the invention;

Fig. 22 is a general schematic view showing beam position control according to the system of Fig. 21;

Fig. 23 is a schematic view showing an embodiment of the system of Fig. 21;

Fig. 24 is a view showing signal waveforms with a deflected galvanomirror, in the system of Fig. 21;

Fig. 25 is a flowchart showing an example of beam position control in the system of Fig. 21;

Fig. 26 is a flowchart showing another example of beam position control in the system of Fig. 21;

Fig. 27 is an explanatory view showing the principle of a beam control system in a fourth aspect (embodiment) of the invention;

Fig. 28 is a schematic view showing an embodiment of the system of Fig.27;

Fig. 29 is an explanatory view showing an offset process according to the system of Fig. 27; and

Fig. 30 is an explanatory view showing a conventional system.

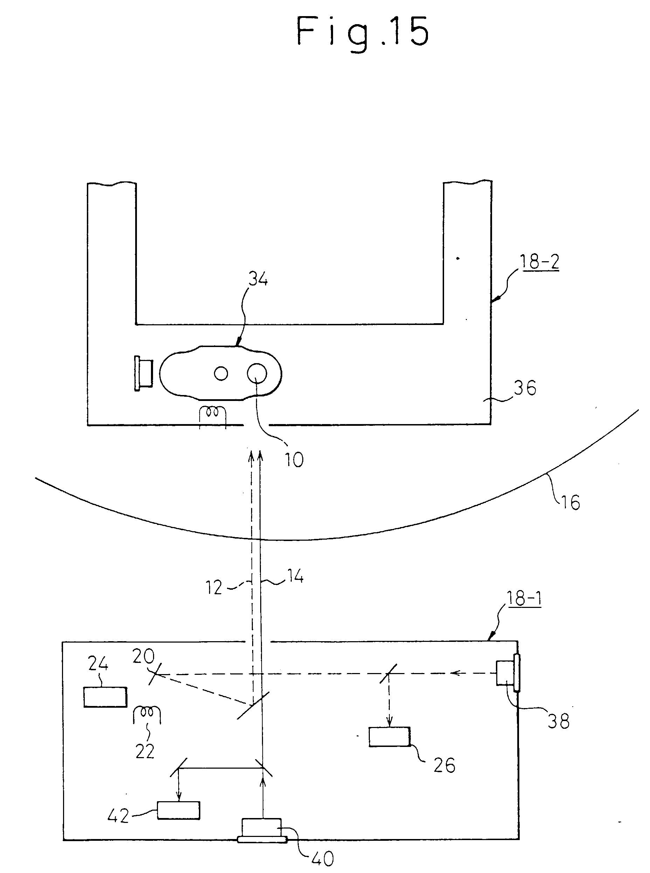

Before explaining one aspect of the invention shown in Fig. lB, a fixed optical system and a movable optical system of a conventional two-beam optical head will be explained with reference to Fig. 15.

In Fig. 15, numeral 16 is a medium (for example, a magneto-optic disk). For this magneto-optic disk 16, there are arranged a fixed optical system 18-1 and movable optical system 18-2 mounted on a carriage 36 that is freely moved across tracks by, for example, a VCM positioner.

The fixed optical system 18-1 has a semiconductor laser 38 for reading and a semiconductor laser 40 for writing. A read beam 12 from the semiconductor laser 38 is reflected by a galvanomirror 20 disposed in a reading optical system, passed through an object lens 10 of a lens actuator 34 of the movable optical system 18-2, and emitted onto the magneto-optic disk 16. A return beam from the magneto-optic disk 16 is passed through the reading optical system and made incident to a tracking error detector 26 employing a two-piece light receiving element for detecting a tracking error.

On the other hand, a write beam 14 from the writing semiconductor laser 40 is passed through the object lens 10 of the movable optical system 18-2, and emitted onto the magneto-optic disk 16. A return beam therefrom is made incident to a tracking error detector 42 employing a two-piece light receiving element for detecting a tracking error.

The galvanomirror 20 is turned by an actuator coil 22 serving as mirror driving means, to move the read beam 12 across tracks. The position of the galvanomirror 20 is detected by a position detector 24.

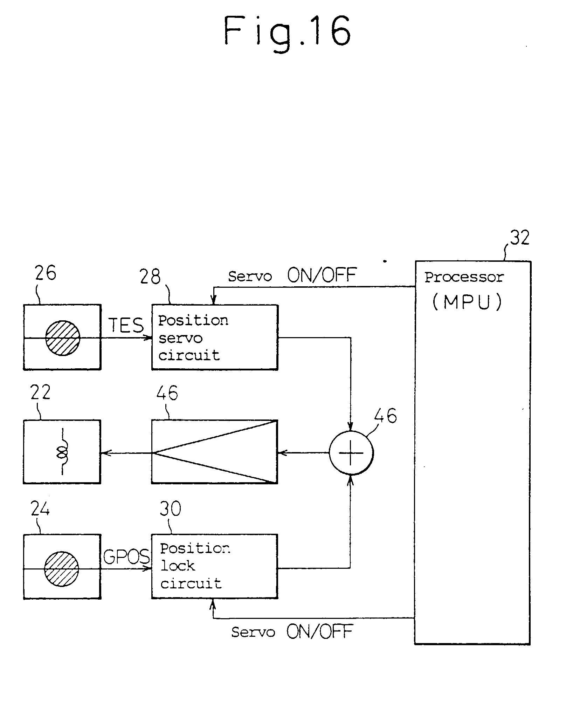

Figure 16 is a schematic view showing a read beam position control system according to the prior art.

In Fig. 16, a position servo loop for carrying out tracking control of the read beam according to the tracking error signal comprises the tracking error detector 26, a position servo circuit 28, an adder 44, a power amplifier 46, and the actuator coil 22. This loop controls the position of the beam by zeroing a tracking error signal TES, thereby keeping the read beam on a track. A position lock loop for keeping the galvanomirror 20 at its neutral position according to the galvanomirror position signal comprises the position detector 24, a position lock circuit 30, the adder 44, the power amplifier 46, and the actuator coil 22. This loop locks the galvanomirror 20 at the neutral position by zeroing a position signal GPOS even if there is disturbing vibration.

According to the read beam position control system of the prior art, the position servo control (tracking control) according to the tracking error signal TES and the galvanomirror position lock control according to the galvanomirror position signal GPOS may interfere with each other so that, when the position of the read beam is controlled, a zero point of the tracking error signal TES for the on-track control does not always agree with a zero point of the position signal GPOS for the neutral control. This disagreement of the zero points may apply opposite forces to the galvanomirror 20. For example, when the actuator coil 22 is driven to zero the tracking error signal TES, the position signal GPOS, which has been at the zero point at the moment, may be increased, so that another opposite force must be applied to zero the position signal GPOS. This may produce a servo remainder (incomplete servo) when the beam is set on a target track after a track jump, to cause a track jump error.

To solve the problem, an object of the one aspect of the invention is to provide a beam position control system of an optical disk unit, which prevents a read beam's tracking error due to a conflict between the position servo control and the position lock control of the galvanomirror, thereby improving stability against disturbing vibration.

The one aspect of the invention will be explained in detail.

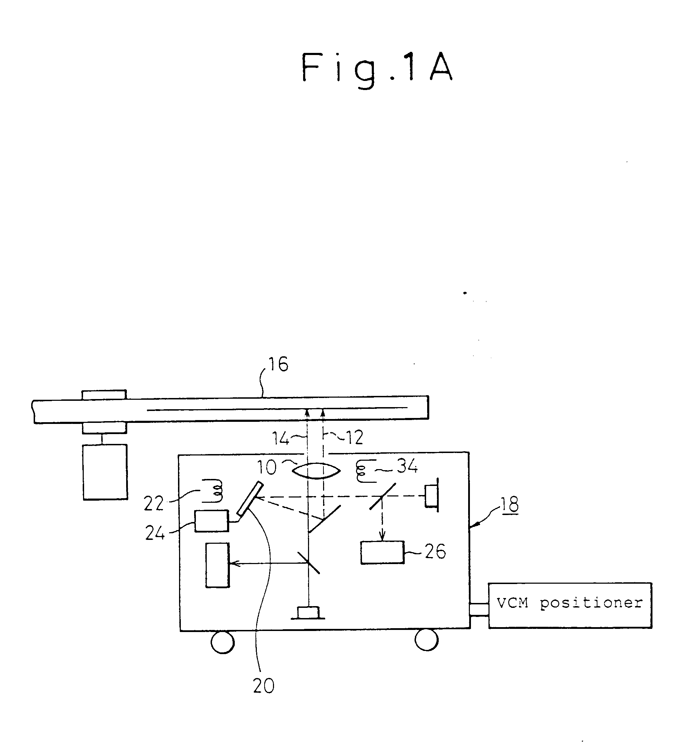

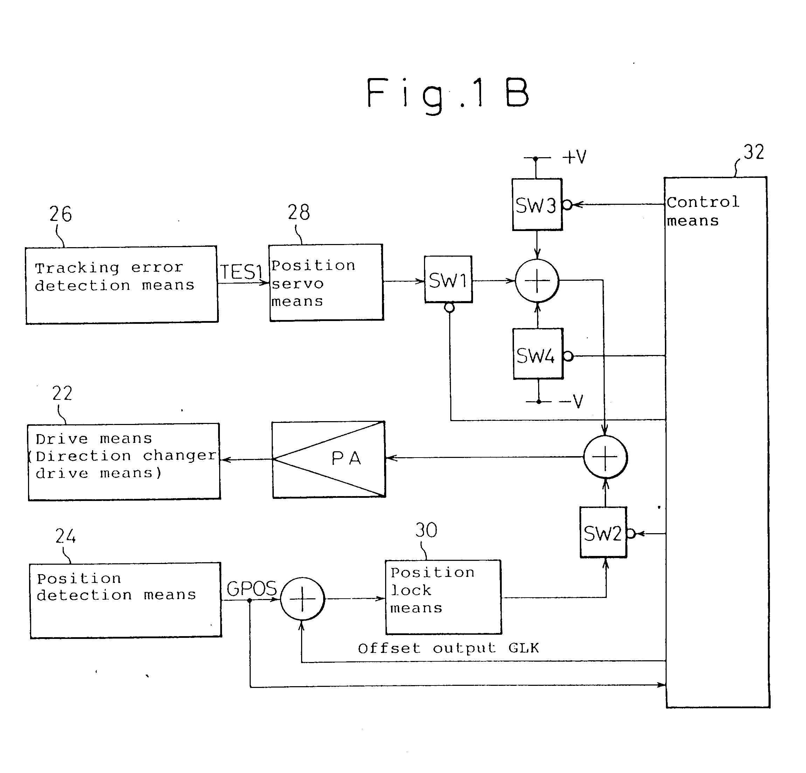

Figure 1A shows essential part of an optical head according to the invention, and Fig. 1B shows a principle of the one aspect of the invention.

The invention is applied for an optical disk unit of the following arrangement.

Namely, the optical disk unit to which the invention is applied comprises:

an optical head 18 for passing at least two beams including a read beam 12 and a write beam 14 through a single object lens 10, and simultaneously writing and reading data to and from a medium 16 with a plurality of the beams;
lens drive means 34 for driving the object lens 10 for simultaneously moving the beams across tracks of the medium;
galvanomirror drive means (direction changer drive means) 22 for driving a galvanomirror 20 serving as beam direction change means, to move the read beam 12 across the tracks of the medium;
position detection means 24 for detecting the position of the galvanomirror 20 and providing a position signal (GPOS);
tracking error detection means 26 for providing a tracking error signal (TES1) detected according to a return beam of the read beam 12 from the medium;
position servo means 28 for driving the galvanomirror 20 according to the tracking error signal (TES1), to carry out tracking control of the read beam 12; and
position lock means 30 for keeping the galvanomirror 20 at a predetermined position according to the galvanomirror position signal (GPOS).

A beam position control system according to the one aspect of the invention for such an optical disk unit comprises a first servo switch SW1 for starting and stopping the position servo operation of the position servo means 28, a second servo switch SW2 for starting and stopping the position lock operation of the position lock means 30, and control means 32 for turning ON and OFF the first and second servo switches SW1 and SW2 according to a beam position control state, to enable one, or both, or none of the position servo operation and position lock operation.

More precisely, the system has the following modes 1 to 6.

[Mode 1]

When the first servo switch SW1 is OFF to disable the position servo operation, the control means 32 turns ON the second servo switch SW2 to enable the position lock operation.

[Mode 2]

When a seek operation with the read beam 12 is completed and the read beam 12 is to be set on a target track, the control means 32 turns ON the first and second servo switches SW1 and SW2 to enable both the position servo operation and position lock operation, and once the beam is set on the track, turns OFF the second servo switch SW2 to carry out the position servo operation alone.

[Mode 3]

When the write beam 14 alone is jumped across tracks during the position servo operation of the read beam 12, the control means 32 turns OFF the servo switch SW1 to disable both the position servo operation of the read beam 12 and the position lock operation and leave the galvanomirror 20 uncontrolled until the jump is completed.

[Mode 4]

For this mode 4, a third servo switch SW3 for applying a forward drive signal (+V) to the galvanomirror drive means 22 and a fourth servo switch SW4 for applying a reverse drive signal (-V) to the same are newly arranged.

When the read beam 12 alone is jumped during the position servo operation of the read beam 12, the control means 32 turns OFF the servo switches SW1 and SW2 to disable both the position servo operation and position lock operation, and controls the third servo switch SW3 or the fourth servo switch SW4.

[Mode 5]

While carrying out the position servo operation of the read beam 12 with the servo switch SW1 being ON, the control means 32 fetches the position signal (GPOS) from the position detection means 24, and finds an offset signal (GLK) such that the position signal (GPOS) is unchanged when the servo switch SW2 is turned ON to lock the position of the galvanomirror.

When the write beam 14 alone is jumped across tracks, the control means 32 turns OFF the servo switch SW1 to disable the position servo operation of the read beam 12 until the completion of the jump, and at the same time, applies the offset signal (GLK) to lock the position of the galvanomirror 20 at an offset state. This causes no change in relative positions of the read and write beams.

When the track jump is completed, the control means 32 turns OFF the second servo switch SW2, and ON the first servo switch SW1 to resume the position servo operation.

[Mode 6-1]

Similar to the mode 4, a third servo switch SW3 for applying a forward drive signal (+V) to the galvanomirror drive means 22 and a fourth servo switch SW4 for applying a reverse drive signal (-V) to the same are arranged.

When an immediate read operation is carried out during a write operation, a higher device may provide a seek instruction indicating differences for positional deviations of the read beam 12 and write beam 14. If the difference for the write beam 14 indicated in the seek instruction is zero, the control means 32 turns OFF the servo switch SW1 to disable both the position servo operation of the read beam 12 and the position lock operation, and controls the third servo switch SW3 or the fourth servo switch SW4.

[Mode 6-2]

When an immediate read operation is carried out during a write operation, the higher device may provide a seek instruction indicating differences for positional deviations of the read beam 12 and write beam 14. If the difference for the write beam 14 indicated in the seek instruction is not zero, the control means 32 turns ON the servo switch SW1 to enable the position servo operation of the read beam 12, reads the position signal (GPOS) from the position detection means 24, finds an offset with which the position signal (GPOS) is unchanged under a position locked state, and adds this offset to another offset corresponding to a positional difference between the write beam and the read beam, to form an offset signal (GLK) for locking the galvanomirror such that the read beam can be moved while keeping a relative distance from the write beam.

Thereafter, the control means 32 turns OFF the servo switch SW1 to disable the position servo operation of the read beam 12 during the track jump operation of the write beam 14, and applies the offset signal (GLK) previously obtained to lock the position of the galvanomirror to an offset state.

Lastly, the control means 32 turns OFF the second servo switch SW2 after the completion of the track jump, and turns ON the servo switch SW1 to resume the position servo operation.

The beam control system for the optical disk unit according to the one aspect of the invention having the above arrangement enables one, or both, or none of the position servo control and the position lock control of the galvanomirror, to control the read beam to an optimum position under any of on-track state, seek state, position setting state after a seek operation, and positional deviation existing state between the write and read beams. Even if a zero point of the tracking error signal TES does not agree with that of the galvanomirror position signal GPOS, the invention can precisely set the read beam on a target track after a track jump operation without causing a servo remainder of the read beam. Also, the invention surely prevents an unnecessary movement of the galvanomirror due to disturbing vibration and stably controls the position of the read beam.

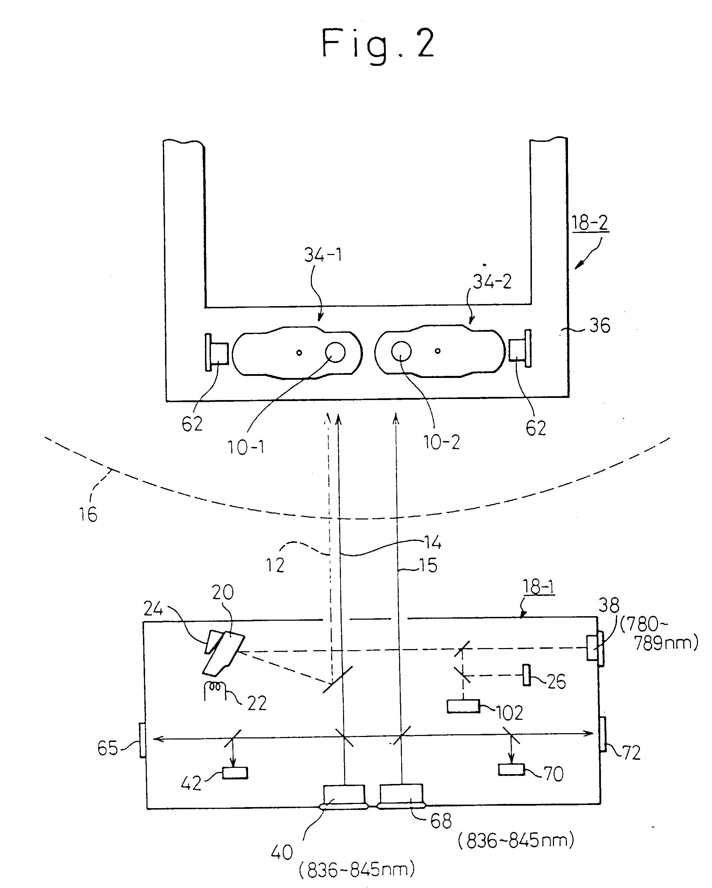

Figure 2 is a plan explanatory view showing an optical head used for an optical disk unit according to the invention. A medium is a magneto-optic disk.

In Fig. 2, the optical head comprises a fixed optical system 18-1 fixed to a frame, and a movable optical system 18-2 mounted on a carriage 36 moved by a VCM positioner across tracks of the magneto-optic disk 16.

The fixed optical system 18-1 includes a semiconductor laser 38 for emitting a read beam 12 having a wavelength of 780 to 789 nm, a semiconductor laser 40 for emitting a write beam 14 having a wavelength of 836 to 845 nm, and a semiconductor laser 180 for emitting an erase beam 15 having a wavelength of 836 to 845 nm, which is the same as that of the write beam.

The read beam 12 from the semiconductor laser 38 advances toward the movable optical system 18-2 through a galvanomirror 20, passes through an object lens 10-1 of a lens actuator 34-1 mounted on the carriage 36, and irradiates the magneto-optic disk 16. A return beam of the read beam 12 from the magneto-optic disk 16 passes through the object lens 10-1 and returns to the fixed optical system 18-1. The return beam is reflected by the galvanomirror 20, split, and made incident to a tracking error detector 26 employing a two-piece light receiving element for detecting a tracking error signal TES1 and simultaneously reproducing a signal RF1 from the read beam. The return beam is also made incident to a photosensor 102 for reproducing a signal RF2. The write beam 14 from the semiconductor laser 40 advances through the fixed optical system 18-1, passes through the object lens 10-1 mounted on the lens actuator 34-1 of the movable optical system 18-2, and irradiates the magneto-optic disk 16. A return beam from the magneto-optic disk 16 passes through the same route and returns to the fixed optical system 18-1. The return beam is split and made incident to a tracking error detector 42 for detecting a tracking error signal TES2 and to a photosensor 65 for detecting a focus error signal FES1.

The erase beam 15 from the semiconductor laser 180 passes through an object lens 10-2 of an erasing lens actuator 34-2 that is separately disposed on the carriage 36 of the movable optical system 18-2, and irradiates the magneto-optic disk 16. A return beam therefrom is separated in the fixed optical system 18-1 and made incident to a tracking error detector 70 for detecting an erase tracking error signal TES3 and to a photosensor 72 for detecting a focus error signal FES2.

The lens actuators 34-1 and 34-2 mounted on the carriage 36 of the movable optical system 18-2 are, in this embodiment, two-dimensionally rocking lens actuators that can move the object lenses 10-1 and 10-2 in two directions, i.e., a direction across tracks of the magneto-optic disk 16 and a direction to and away from a face of the disk.

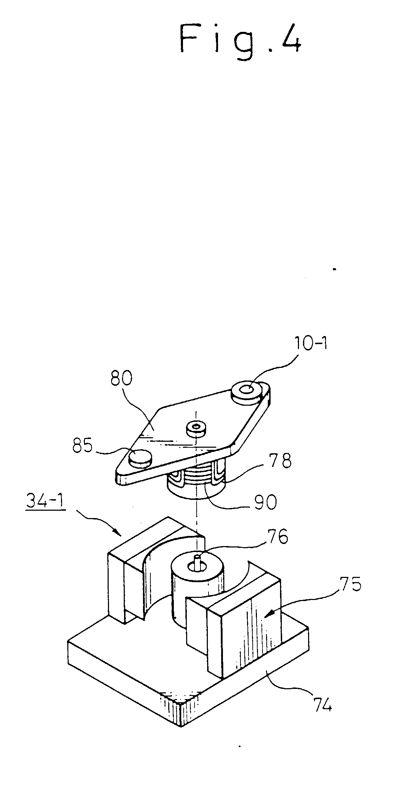

Figure 4 is an exploded view showing the lens actuator 34-1 of Fig. 2. It comprises a base 74, a magnetic circuit 75 fixed on the base 74, and an upright slide shaft 76 disposed at the center of the magnetic circuit 75. With respect to this fixed portion on the base 74, a movable portion is a rotary arm 80. The rotary arm 80 has a lower cylindrical portion around which a tracking coil 78 and a focus coil 90 are arranged. One end of the rotary arm 80 has the object lens 10-1, and the other end a balance weight 85. A center hole of the rotary arm 80 engages with the slide shaft 76 of the base 74. The rotary arm 80 is turned around and slid along the shaft.

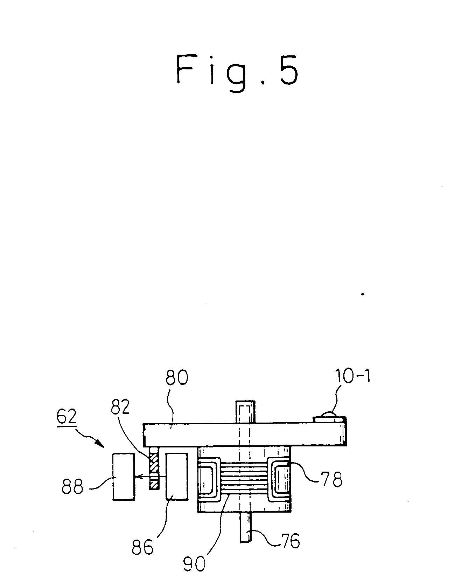

Figure 5 shows movable part of Fig. 4 and a lens position detector 62 for detecting a turned quantity of the lens actuator 34-1 in a turning direction relative to a neutral position of the lens actuator. The rotary arm 80 has a slit plate 82 at a lower end face opposite to the object lens 10-1. A light emitting portion 86 is fixed on the inner side of the slit plate. Light from the light emitting portion 86 passes through a slit of the slit plate and is received by a two-piece photosensor 88. When the rotary arm 80 is at its neutral position, two light receiving portions of the two-piece photosensor 88 receive an equal quantity of light. When the rotary arm 80 is turned, the light receiving quantity of one of the light receiving portions on a leading side increases, while that of the other decreases.

Accordingly, a lens position signal LPOS is obtained as a differential signal of the two light receiving portions.

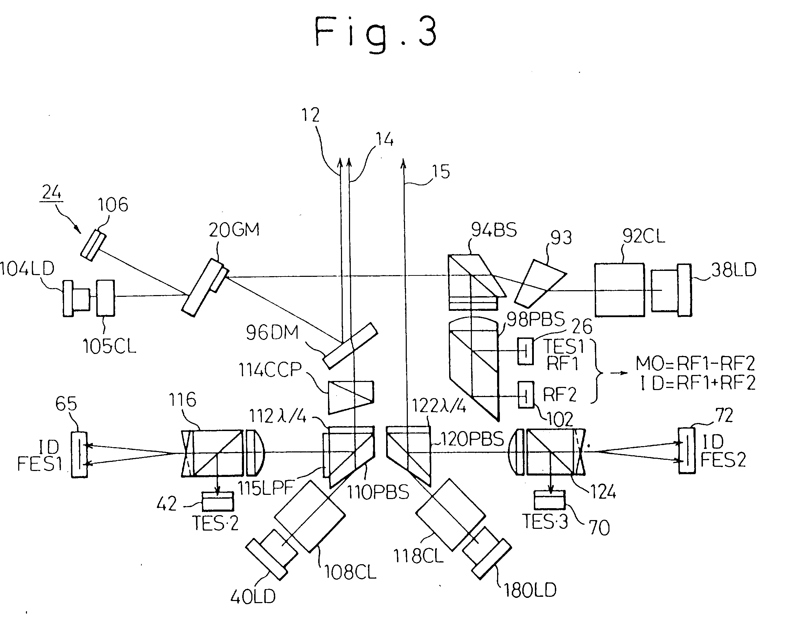

The details of the head optical system of Fig. 2 will be explained with reference to Fig. 3.

Firstly, the head optical system for the read beam 12 will be explained. The semiconductor laser 38 provides a beam, which is converted into a coherent beam by a collimator lens 92. A prism 93 changes the direction of the coherent beam, which is passed through a beam splitter 94, and made incident to the galvanomirror 20. The beam is reflected by the galvanomirror 20 and by a dichroic mirror 96, passed through the object lens 10-1 of the movable optical system of Fig. 2, and made incident to the magneto-optic disk 16. A return beam from the magneto-optic disk 16 is reflected by the dichroic mirror 96 and galvanomirror 20, and made incident to the beam splitter 94, which reflects the beam in an orthogonal direction. The beam is then made incident to a polarization beam splitter 98, which splits the beam into two parts for the tracking error detector 26 and for the photosensor 102. The tracking error detector 26 provides the tracking error signal TES1 and signal RF1 based on the read beam 12 according to a push-pull method (a far field method). The photosensor 102 provides the signal RF2. A subtraction of the signals RF1 and RF2 provided by the tracking error detector 26 and photosensor 102 provides a reproduced magneto-optic signal MO, and an addition thereof provides an ID signal indicting an intensity due to irregularities of a preformat portion. Namely, the magneto-optic signal MO and preformat ID signal are obtained as follows:

$$MO = RF1 - RF2$$

$$ID = RF1 + RF2$$

Next, the optical system for the write beam 14 will be explained.

The semiconductor laser 40 emits a pulse beam according to a data bit of 1 or 0. The beam is converted into a coherent beam by a collimator lens 108, passed through a polarization beam splitter 110, a $\lambda/4$ plate 112, a color correction prism (CCP) 114, and the dichroic mirror 96, and provided to the object lens 10-1 of the movable optical system of Fig. 2. The beam is then passed through the object lens 10-1 and emitted to the magneto-optic disk 16. A return beam from the magneto-optic disk 16 is passed through the same route, made incident to the polarization beam splitter 110, reflected by the polarization beam splitter 110 in an orthogonal direction, passed through a low-pass filter 115, and made incident to a Foucault optical unit 116. The Foucault optical unit 116 is for providing a focus error signal FES1 according to Foucault's method. The beam from the Foucault optical unit 116 is made incident to the photosensor 65, which provides the focus error signal FES1 for the write beam 14 as well as an ID signal corresponding to a light intensity determined by irregularities of a track preformat. The return beam of the write beam 14 reflected by the Foucault optical unit 116 in an orthogonal direction is provided to the tracking error detector 42, which provides the tracking error signal TES2 of the write beam 14 according to the push-pull method (far field method). The reason why the low-pass filter 115 is disposed is because, when an immediate reading operation with the read beam is carried out during a write operation, the magneto-optic disk 16 provides a return beam of the write beam 14 as well as a return beam of the read beam 12. Accordingly, the low-pass filter 115 passes only the return beam of the write beam 14 having a longer wavelength and blocks the return beam of the read beam 12 having a shorter wavelength.

Next, the optical system for the erase beam 15 will be explained.

The semiconductor laser 180 provides a beam, which is converted into a coherent beam by a collimator lens 118. The coherent beam is passed through a polarization beam splitter 120 and a $\lambda/4$ plate 122, and provided to the object lens 10-2 of the movable optical system of Fig. 2, to irradiate the magneto-optic disk 16. A return beam from the magneto-optic disk 16 is reflected by the polarization beam splitter 120 in an orthogonal direction, passed through a Foucault optical unit 124, and made incident to the photosensor 72. The photosensor 72 provides a focus error signal FES2 for the erase beam 15 as well as an ID signal corresponding to a light intensity of a track preformat portion. The return beam separated by the Foucault optical unit 124 is made incident to the tracking error detector 70, which provides a tracking error signal TES3 of the erase beam 15 according to the push-pull method (far field method).

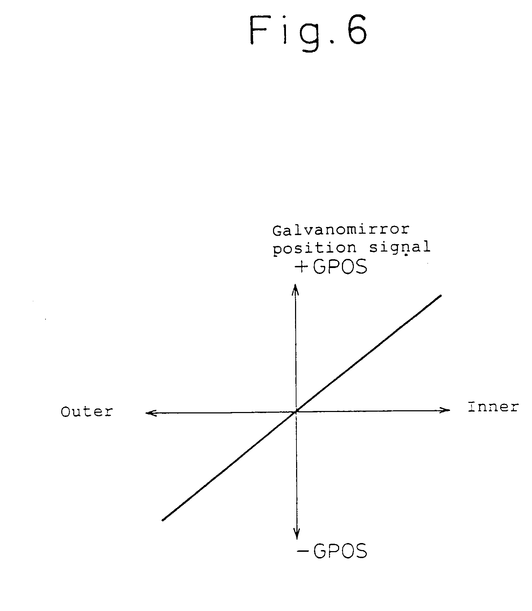

The position detector 24 for detecting the position of the galvanomirror 20 disposed in the optical system for the read beam 12 comprises a semiconductor laser 104, a collimator lens 105, and a two-piece photosensor 106. The semiconductor laser 104 emits a beam, which is converted into a cylindrical beam by the collimator lens 105, reflected by the back face of the galvanomirror 20, and made incident to the two-piece photosensor 106. Similar to the two-piece photosensor 88 of the lens actuator of Fig. 5, the two-piece photosensor 106 has two photosensors, which receive an equal quantity of light when the galvanomirror 20 is at its neutral position. When the galvanomirror 20 is turned, the quantity of light on one of the photosensors on a leading side increases, while that of the other decreases. Accordingly, the galvanomirror position signal GPOS is detected as a difference of the outputs of the two photosensors. As shown in Fig. 6 as an example, the position signal positively increases when the read beam 12 is moved toward the inner side of the magneto-optic disk, and negatively increases when the beam is moved toward the outer side of the disk.

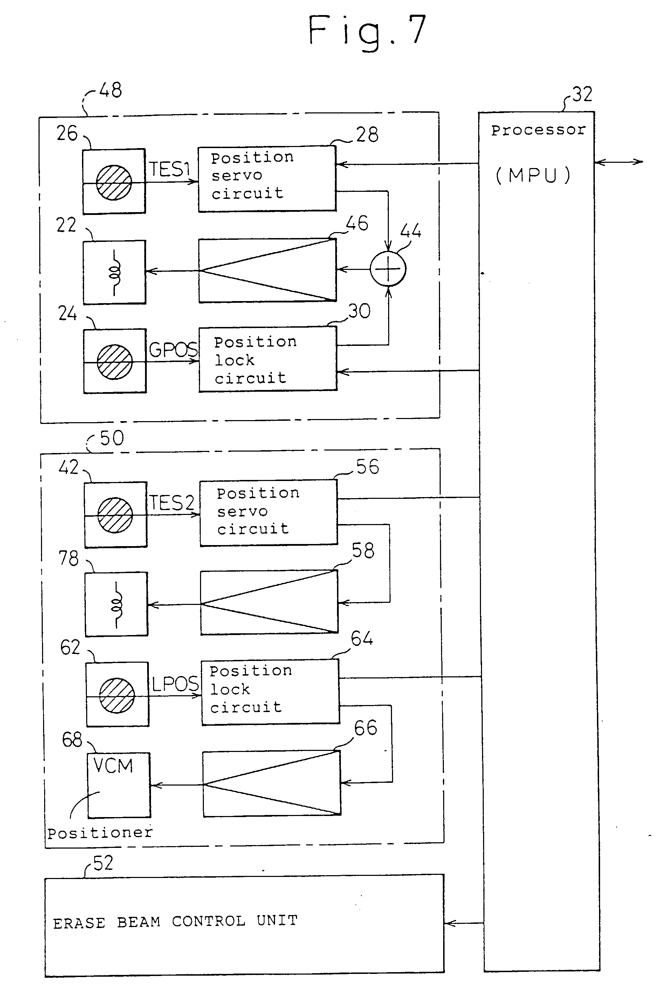

Figure 7 is a general schematic view showing a control portion for controlling the positions of the read beam 12, write beam 14, and erase beam 15 in the optical head of Figs. 2 and 3.

In Fig. 7, a read beam control portion 48 is arranged for the read beam 12, a write beam control portion 50 for the write beam 14, and an erase beam control portion 52 for the erase beam 15.

The read beam control portion 48 carries out servo control of the actuator coil 22 for driving the galvanomirror 20, which serves as direction change means for changing the direction of the beam according to the tracking error signal TES1 from the tracking error detector 26 and the galvanomirror position signal GPOS from the position detector 24. Namely, the tracking error detector 26, a position servo circuit 28, an adder 44, a power amplifier 46, and the actuator coil 22 form a position servo loop for controlling the position of the read beam 12 by zeroing the tracking error signal TES1. The position detector 24, a position lock circuit 30, the adder 44, the power amplifier 46, and the actuator coil 22 form a position lock servo loop for locking the galvanomirror 20 at its neutral position where the galvanomirror position signal GPOS is zero. A processor (MPU) 32 serving as control means turns ON and OFF the position servo circuit 28 and position lock circuit 30 of the reed servo portion 48, thereby enabling and disabling the servo control to achieve one of modes 1 to 6 to be explained later.

The write beam control portion 50 for controlling the position of the write beam 14 involves a position servo loop comprising the tracking error detector 42, a position servo circuit 56, a power amplifier 58, and a tracking coil 78 of the lens actuator, to control the lens actuator to zero the tracking error signal TES2 obtained from the write beam 14. There is also arranged a position lock servo loop comprising the position detector 62, a position lock circuit 64, a power amplifier 66, and a VCM positioner 68 for driving the carriage 36 of the movable optical system. For example, when the lens actuator is moved from its neutral position according to the tracking error signal TES2 during the position control of the write beam 12, the position lock servo loop controls the VCM positioner 68 to return the lens actuator to the neutral position.

The erase beam control portion 52 includes a position servo loop relying on the tracking error signal TES3 of the erase beam. The position servo loop for the erase beam is equal to that of the write beam control portion 50 excluding the position lock servo loop.

Among the beam position control portions shown in Fig. 7, an object of the present invention is the read beam position control by the read beam control portion 48. Since an immediate read operation is carried out during a write operation, the invention includes simultaneous control of the read and write beams.

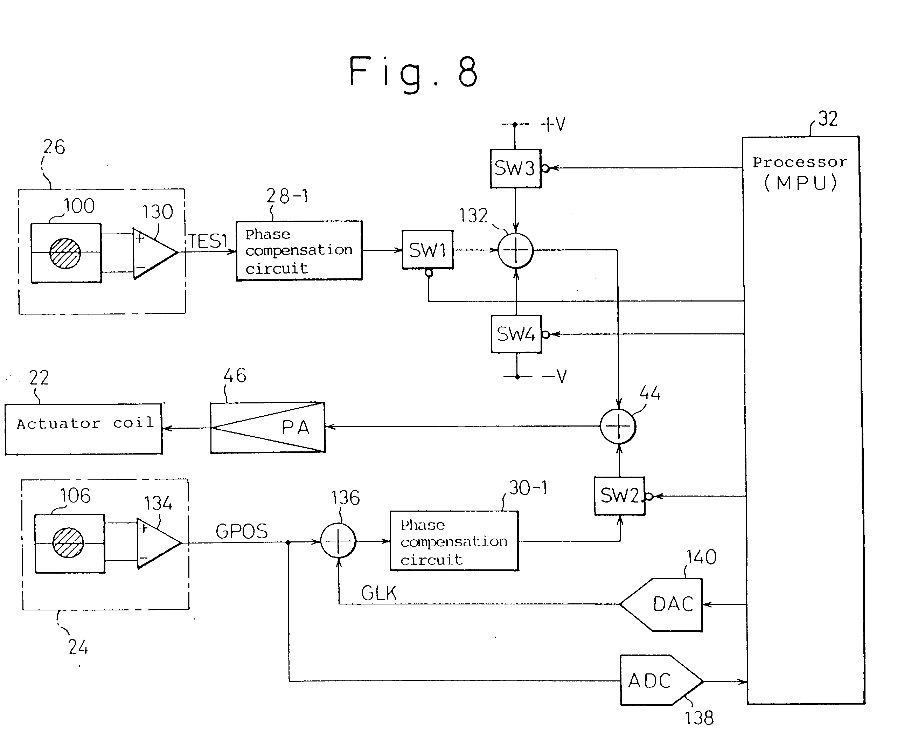

Figure 8 shows an embodiment of the read beam control portion 48 shown in Fig. 7 according to the invention.

In Fig. 8, the position servo loop will be explained at first. The tracking error detector 22 has a two-piece photosensor 100 and a subtracter 130, which detect the tracking error signal TES1 from a return beam of the read beam 12 according to the push-pull method (far field method). According to the push-pull method, two light receiving portions of the two-piece photosensor 100 that are symmetrically disposed on each side of a track center detect a beam reflected and diffracted by a guide groove on the disk, and provide two outputs. The method provides a difference of the outputs as the tracking error signal TES1. The tracking error signal TES1 from the tracking error detector 22 is transferred to a phase compensation circuit 28-1 included in the position servo circuit 28 of Fig. 7. The phase compensation circuit 28-1 carries out phase advancing compensation to increase a high-band gain of a servo band of the signal. The position servo circuit 28 including the phase compensation circuit 28-1 corresponds to the position servo means of the principle view of Fig. 1B. An output of the phase compensation circuit 28-1 is supplied to a servo switch SW1, adders 132 and 44, and the actuator coil 22 through the power amplifier 46.

Next, the position lock servo loop will be explained. The position detector 24 comprises a two-piece photosensor 106 and a subtracter 134, to provide the galvanomirror position signal GPOS having characteristics of, for example, Fig. 6. The galvanomirror position signal GPOS from the position detector 24 is passed through an adder 136 and supplied to a phase compensation circuit 30-1 included in the position lock circuit 30 of Fig. 7 corresponding to the position lock means of the principle view of Fig. 1B. The circuit 30-1 carries out phase advancing compensation for a high band portion of a servo band of the signal. An output of the phase compensation circuit 30-1 is passed through a servo switch SW2, the adder 44, and the power amplifier 46, and supplied to the actuator coil 22 of the galvanomirror.

A gain zero cross frequency representing a servo band of the position servo loop for the tracking error signal TES1 is set to 3 to 5 KHz. On the other hand, a gain zero cross frequency representing a servo band of the position lock servo loop for the galvanomirror position signal GPOS is set to 300 to 1 KHz.

The adder 132 of the position servo loop disposed after the servo switch SW1 is used for controlling the position of the read beam according to open loop control with the servo switch SW1 being OFF. Namely, the adder 132 receives a forward seek control voltage +V through a servo switch SW3 and a reverse seek control voltage -V through a servo switch SW4.

On the other hand, the galvanomirror position signal GPOS from the position detector 24 of the position lock servo loop is converted into a digital signal by an AD converter 138, and fetched by the processor 32 serving as a control means. As will be explained later, the processor 32 turns OFF the servo switch SW2 to disable the position lock servo loop, and ON the servo switch SW1 to enable the position servo loop according to the tracking error signal TES1. The processor 32 fetches the galvanomirror position signal GPOS from the position detector 24, computes an offset quantity with which the GPOS signal is unchanged under a position lock state, sets the offset quantity in a DA converter 140, and adds, through the adder 136, an offset signal GLK from the DA converter 140 to the galvanomirror position signal GPOS.

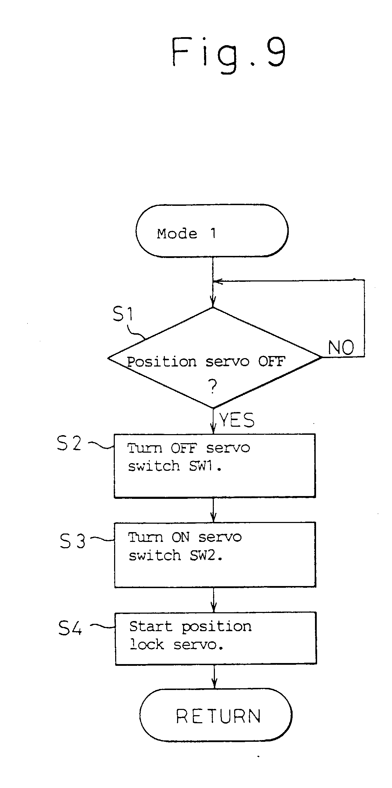

The processor 32 serving as the control means turns ON and OFF the servo switches SW1 and SW2 according to a beam position control state, to enable one, or both, or none of the position servo operation and position lock operation, thereby controlling the read beam to an optimum position. The beam position control by the processor 32 takes one of modes 1 to 6 shown in Figs. 9 through 14.

Figure 9 is a flowchart showing the beam position control of mode 1 carried out by the processor 32 of Fig. 8.

According to the mode 1 of Fig. 9, Step S1 (hereinafter, the word "Step" will be omitted) monitors an OFF status of the position servo loop based on the tracking error signal TES1. When the OFF status of the position servo loop is established due to, for example, a track jump operation, S2 turns OFF the servo switch SW1 to disable the position servo loop, and S3 turns ON the servo switch SW2 so that the position lock servo operation is carried out in S4.

This switching from the position servo loop, which has been disabled, to the position lock servo loop locks the galvanomirror 20 at a given position irrespective of disturbing vibration, thereby stabilizing the read beam when the position lock servo is resumed.

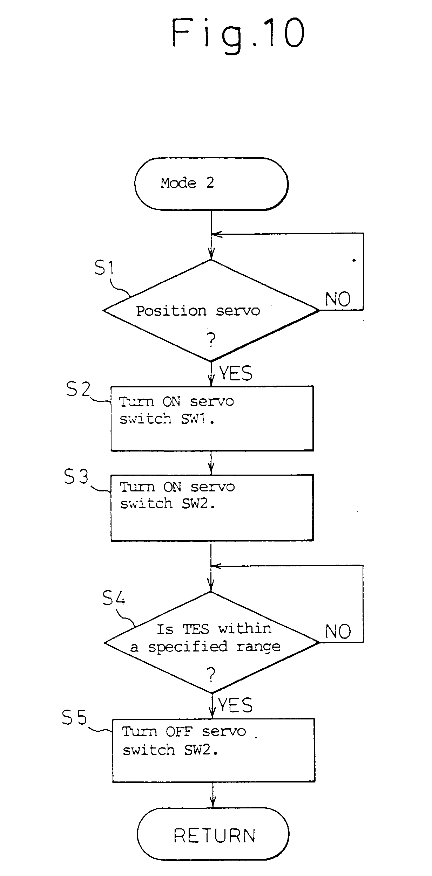

Figure 10 is a flowchart showing a beam position control operation of mode 2 according to the invention. This mode 2 relates to track servo control for bringing the beam onto a target track after the completion of a track jump operation.

Namely, S1 checks to see whether or not the track jump is completed and the position servo loop is to be started. If it is determined that the position servo control is to be started, S2 turns ON the servo switch SW1 to enable the position servo loop. S3 turns ON the servo switch SW2 to simultaneously enable the position lock operation. After S2 and S3 start the position servo operation and position lock operation, S4 monitors whether or not the tracking error signal TES1 is stabilized to a specified value. When the tracking error signal TES1 is stabilized to the specified value to establish an on-track status, S5 turns OFF the servo switch SW2 to disable the position lock operation. Thereafter, the beam position is controlled only by the position servo operation.

The mode 2 of Fig. 10 carries out both the position servo operation according to the tracking error signal TES1 and the position lock operation according to the galvanomirror position signal GPOS while the beam is being unstable after a track jump, to quickly stabilize the beam to an on-track condition. Once the beam is stabilized, the position lock servo loop according to the galvanomirror position signal GPOS is disabled to prevent a conflict between the two servo loops from causing a servo remainder and an off-track.

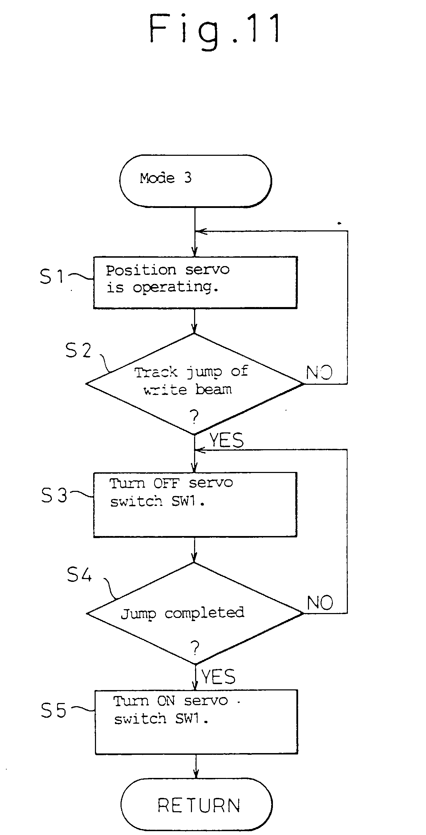

Figure 11 is a flowchart showing the beam position control of mode 3 according to the invention. Under the mode 3, the position servo operation of the read beam is carried out according to the tracking error signal TES1, and at the same time, the write beam is jumped across tracks.

In Fig. 11, S1 carries out the position servo loop of the write beam according to the tracking error signal TES1. Under this state, S2 checks an instruction for jumping the write beam across tracks. When S2 finds the instruction for jumping the write beam across tracks, S3 turns OFF the servo switch SW1 to disable the position servo operation of the read beam. At this time, the servo switch SW2 is already OFF in S1, so that the servo switches SW1 and SW2 are both OFF during the track jump. Namely, the position servo operation and position lock operation are both disabled, and the galvanomirror 20 is uncontrolled.

S4 completes the track jump of the write beam, and S5 turns ON the servo switch SW1 to resume the position servo operation of the read beam.

The beam position control of mode 3 of Fig. 11 is effective when the position of the read beam, which is left uncontrolled during the jump, does not change its relative position to the write beam during the track jump of the write beam.

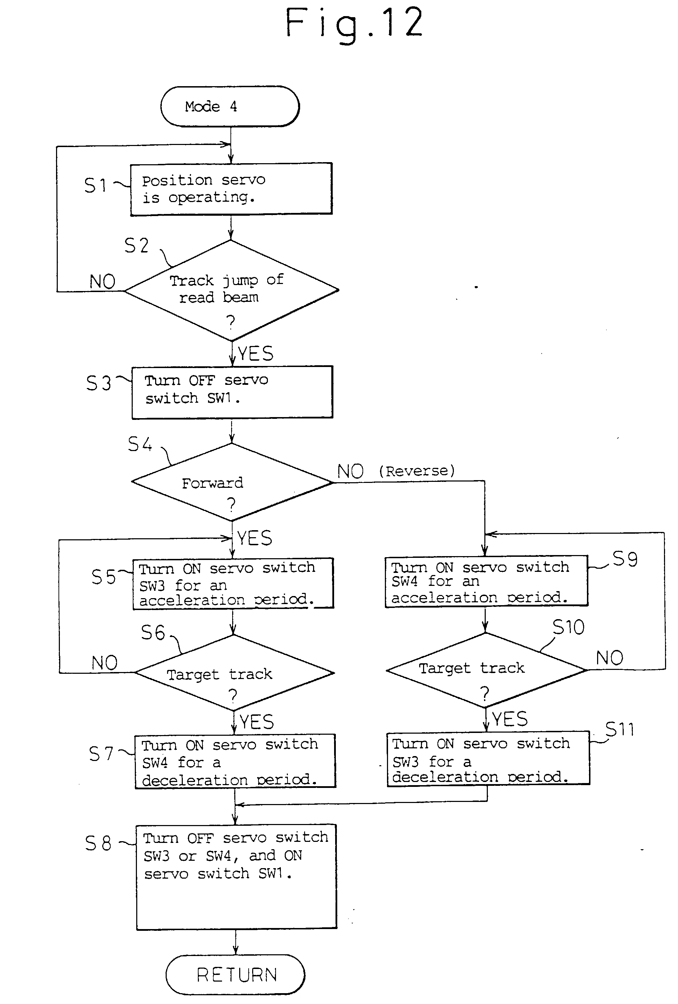

Figure 12 is a flowchart showing the beam position control of mode 4 according to the invention. Under the mode 4, the position servo operation of the read beam is carried out, and at the same time, the read beam alone is jumped across tracks.

In Fig. 12, S1 enables the position servo operation of the read beam. S2 monitors whether or not the read beam is jumped across tracks. When S2 finds the track jump of the read beam, S3 turns OFF the servo switch SW1 to disable the position servo operation of the read beam according to the tracking error signal TES1. S4 determines whether the direction of the track jump is forward or reverse. If it is forward, S5 turns ON the servo switch SW3 only for an acceleration period, to accelerate the galvanomirror 20 in the forward direction by open control. S6 monitors whether or not the read beam has reached a target track. For example, S6 finds a track difference to the target track according to the number of crossed tracks obtained from zero crossings of the tracking error signal. When the track difference becomes zero, S6 determines that the beam has reached the target track, and S7 turns ON the servo switch SW4 only for a deceleration period. Thereafter, S8 turns ON the servo switch SW1 to start the position servo operation of the read beam according to the tracking error signal TES.

On the other hand, if S4 determines that the seek direction is reverse, S9 turns ON the servo switch SW4 only for an acceleration period, to drive the galvanomirror 20 with a control voltage -V according to open control. When S10 determines that the beam has reached a target track, S11 turns ON the servo switch SW3 only for a deceleration period.

Thereafter, S8 turns ON the servo switch SW1 to resume the position servo operation of the read beam according to the tracking error signal TES1.

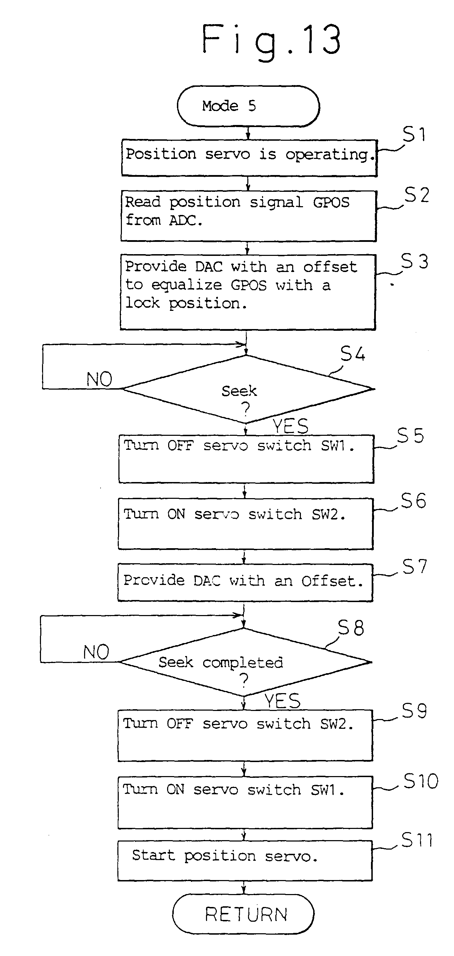

Figure 13 is a flowchart showing the beam position control of mode 5 of the invention. The mode 5 carries out the position servo operation of the read beam according to the tracking error signal TES1, reads the galvanomirror position signal GPOS, adds an offset signal to the signal GPOS so that the galvanomirror position signal GPOS does not change when the position servo operation is switched to the position lock operation, shifts the galvanomirror from its neutral position in response to the offset signal at the time of a track jump, and sets the beam onto a target track according to the position servo operation after the completion of the track jump.

In Fig. 13, S1 carries out the position servo operation of the read beam according to the tracking error signal TES1 to put the beam on a track. S2 reads the galvanomirror position signal GPOS from the position detector 24 and sets the same in the AD converter 138. S3 sets offset data in the DA converter so that the position signal GPOS is at a lock position, and provides the adder 136 with an offset signal GLK.

S4 monitors a seek instruction for jumping the write beam across tracks. If the seek instruction is found, the servo switch SW1 is turned OFF to disable the position servo loop, and S6 turns ON the servo switch SW2 to enable the position lock operation according to the galvanomirror position signal GPOS. At this time, the offset data found in S1 to S3 is set in the DA converter 140, and the offset signal GLK is given to the adder 136 so that the position of the galvanomirror 20 is locked at an offset position indicated by the offset signal GLK.

S8 monitors the completion of the seek operation with the write beam. When the seek operation with the write beam is completed, S9 turns OFF the servo switch SW2, and S10 turns ON the servo switch SW1. Then, S11 resumes the position servo operation according to the tracking error signal TES1.

The beam position control of mode 5 forcibly locks the galvanomirror at the offset position according to the offset signal GLK, so that no position servo operation may be carried out during the track jump. After the write beam jumps across tracks and is set on a target track, the position servo operation of the read beam is resumed. As a result, the read beam may be correctly positioned onto a track with keeping the same relative positions between the read and write beams as at the start of the seek operation. Accuracy of positioning the read beam to a track with keeping the same relative positions between the read and write beams is about one fourth of a track.

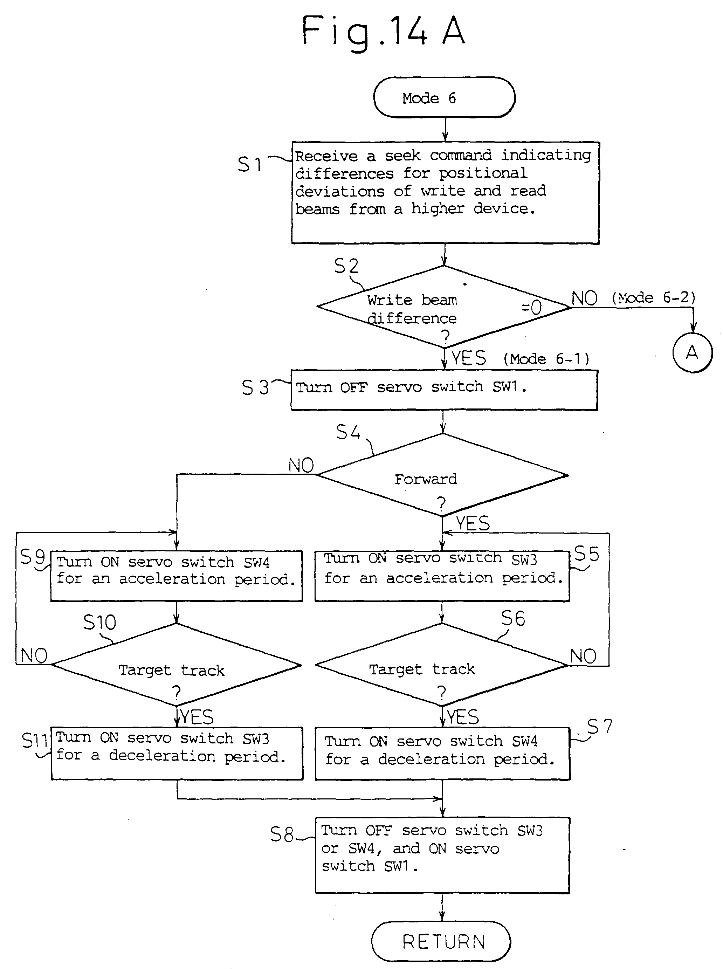

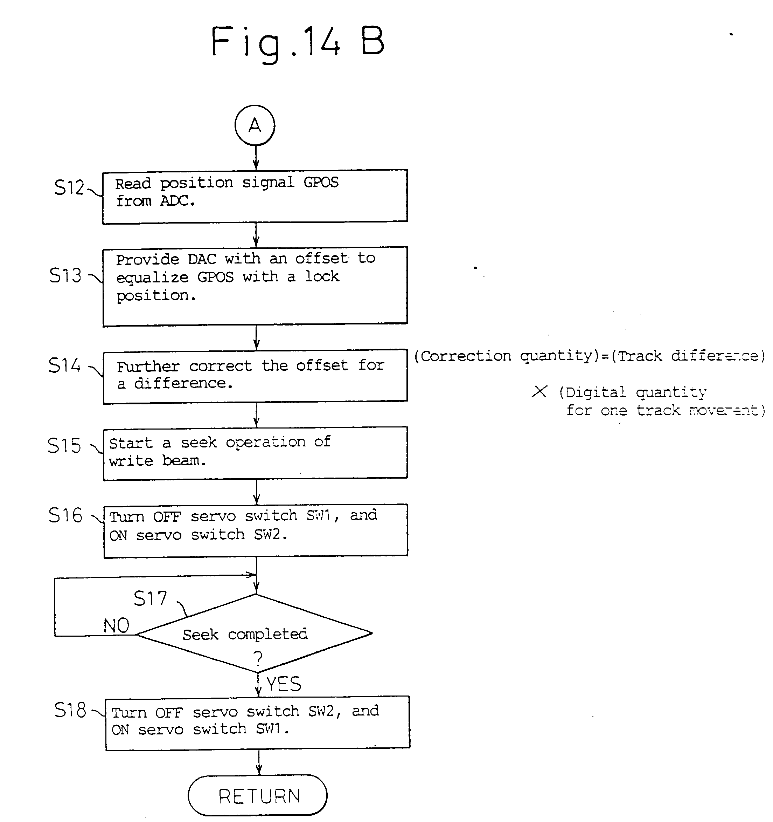

Figures 14A and 14B are flowcharts showing the beam position control of mode 6 of the invention. The mode 6 is set when a higher controller provides a seek command involving differences because the track positions of the write and read beams deviate while an immediate read operation, etc., is being carried out during a write operation.

In Figs. 14A and 14B, S1 receives the seek command involving differences from the higher controller for the write and read beams. S2 checks to see whether the difference for the write beam in the seek command from the higher controller is zero or not, i.e., whether or not a seek operation with the write beam is to be carried out. If the difference of the write beam is zero (mode 6-1), i. e., if there is no seek operation with the write beam but only a seek operation with the read beam, processes following S3 that are the same as those of the mode 4 of Fig. 12 are carried out.

On the other hand, if the difference for the write beam is not zero (mode 6-2) in S2, i.e., if both the write and read beams are moved with seek operations, processes following S12 are carried out.

Similar to S2 and S3 of the mode 5 of Fig. 13, S12 carries out the position servo operation of the read beam according to the tracking error signal TES1, and during the operation, reads the galvanomirror position signal GPOS from the AD converter 138. S13 provides offset data to the DA converter 140 so that the galvanomirror position signal GPOS is set for a lock position, and lets the adder 136 provide the offset signal GLK.

S14 further corrects the offset quantity for a difference between the moving distance of the write beam and that of the read beam instructed by the seek command. A correction quantity for the offset is equal to a value obtained by multiplying a difference between the track differences of the write and read beams by a digital quantity given to the DA converter 140 for moving the read beam for a track width (a galvanomirror sensitivity for moving a beam for a track).

S15 starts the seek operation with the write beam, and S16 turns OFF the servo switch SW1 to disable the position servo operation during the seek operation, and ON the servo switch SW2 to lock the galvanomirror at a position shifted by the offset quantity corrected in S14.

The read beam 12 and write beam 14 in the embodiments of the invention may be replaced with each other.

As explained above, the one aspect of the invention provides a beam position control system of an optical disk unit that carries out an accurate high-speed access operation and minimizes an off-track of a read beam after a track jump even with disturbing vibration.

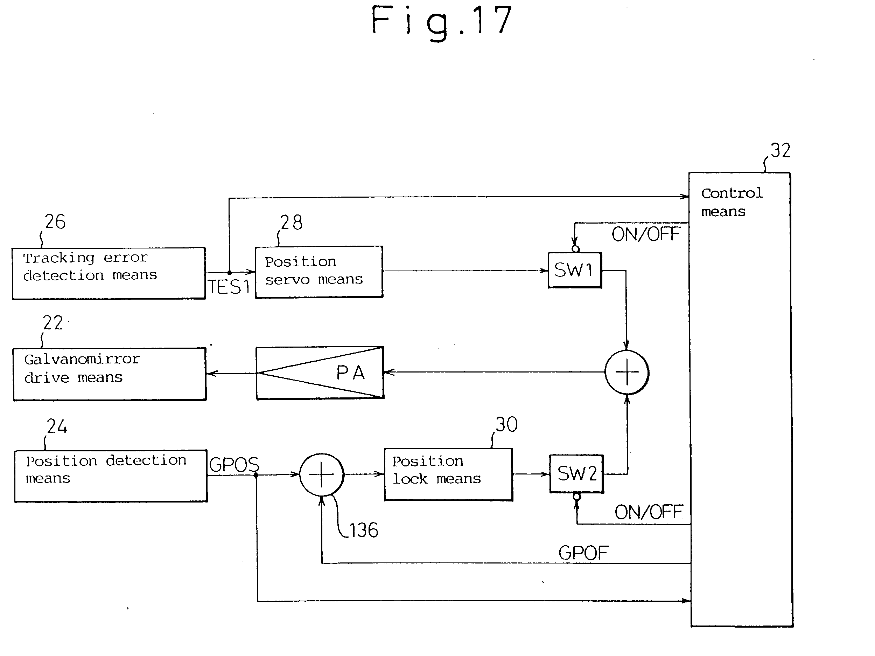

Next, another aspect of the invention shown in Fig. 17 will be explained. Before the explanation, further problems of the conventional arrangement will be explained with reference to Figs. 15 and 16. Tension of cables, etc., connected to the galvanomirror 20 causes a stop point of the position locked galvanomirror to deviate from a zero point of the galvanomirror position signal GPOS. Against this deviation between the stop point of the galvanomirror 20 and the zero point of the galvanomirror position signal, the position lock servo applies a force to zero the galvanomirror position signal GPOS to overcome the mechanical tension applied to the galvanomirror 20. This force is dependent on a servo gain. Accordingly, an adjusting tool is used in a manufacturing stage of the unit, to adjust the gain such that the write and read beams are positioned substantially on the same track with the position of the galvanomirror being locked.

It is difficult, however, to equalize the gains of the unit and adjusting tool with the position of the galvanomirror being locked. In addition, the temperature of the actuator coil of the galvanomirror and variations in outputs of a sensor light source of the galvanometer position detector may change the gains. Due to these factors, the stop point of the galvanomirror may shift when the position of the read beam is locked during a seek operation to be carried out with the write beam, and after the completion of the seek operation, the read beam may be positioned on a different track from a track on which the write beam is positioned. This raises a need of corrective seek operation for the read beam to extend an access time.

To solve the problem of the conventional technique, an object of this aspect of the invention is to remove a mechanical offset of a galvanomirror, to make a read beam correctly follow a seek operation carried out with a write beam, thereby shortening an access time of the two beams.

Figure 17 is an explanatory view showing a principle of this aspect of the invention. As explained before, a first servo switch SW1 is turned ON for the tracking control of a read beam 12, to enable position servo means 28. A second servo switch SW2 is turned ON when the tracking control of the read beam 12 is disabled, to enable position lock means 30. Offset addition means 136 for adding an offset signal GPOF to a galvanomirror position signal provided by position detection means 24. Control means 32 turns ON the servo switch SW2 to enable the position lock control of the galvanomirror when the unit is energized or retried, reads a galvanomirror position signal GPOS, finds the offset signal GPOF for zeroing the galvanomirror position signal GPOS, and provides the offset signal to the offset addition means 136 during a seek operation to be carried out with a write beam 14.

The beam control system according to the invention for an optical disk unit locks the position of the galvanomirror when the unit is started or retried after an access error, obtains the galvanomirror position signal GPOS at this time, finds the offset signal GPOF for zeroing the position signal, and adds the offset signal GPOF to the position lock control of the read beam during a seek operation with the write beam. Even if a servo gain in the position lock control deviates from an adjusted gain set during manufacturing, the galvanomirror position lock control can maintain an adjusted state that positions the read beam on the same track as the write beam. This eliminates a correction seek operation of the read beam after the completion of the seek operation with the write beam, thereby shortening an access time of the two-beam method.

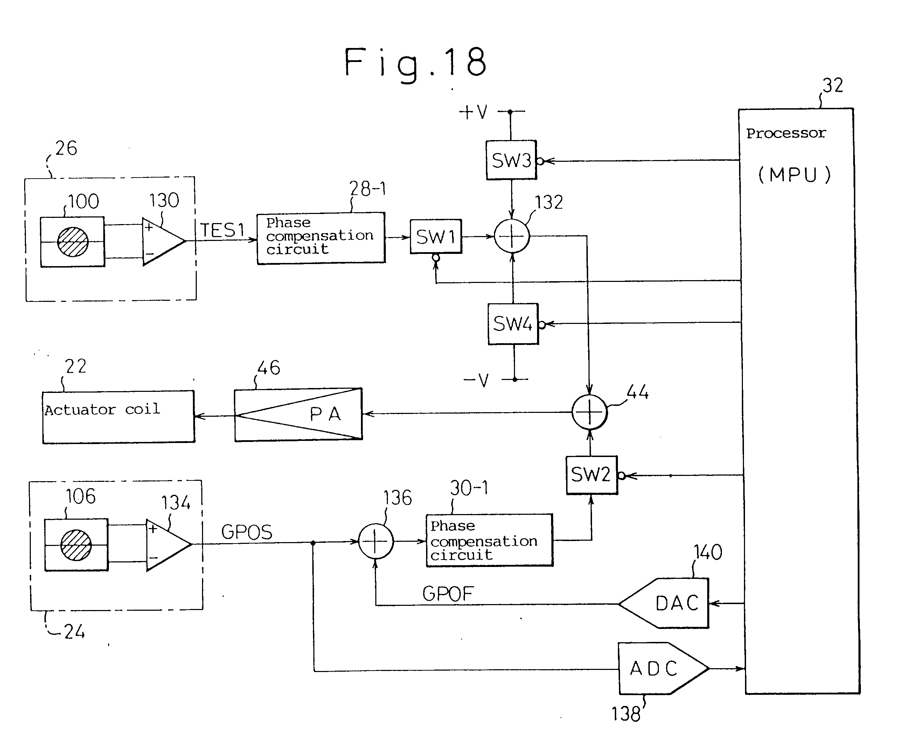

Figure 18 shows a read servo portion according to an embodiment of the invention of Fig. 17. In Fig. 18, a position servo loop for carrying out the tracking control, i.e., the position servo control of a read beam comprises a tracking error detector 26, a phase compensation circuit (PC circuit) 28-1 included in a position servo circuit 28, a servo switch SW1, an adder 44, a power amplifier 46, and an actuator coil 22.

The servo switch SW1 disposed after the phase compensation circuit 28-1 is turned ON by a processor 32 when the tracking control of the read beam is carried out, and turned OFF when a seek operation with the write beam is carried out by a lens actuator.

A position lock servo loop for locking the galvanomirror 20 at its neutral position comprises a position detector 24, an adder 136, a phase compensation circuit 30-1 included in a position lock circuit 30 of Fig. 7, a servo switch SW2, the adder 44, the power amplifier 46, and the actuator coil 22. The galvanomirror position detector 24 has a two-piece photosensor 106 and a subtracter 134, to provide a galvanomirror position signal GPOS having characteristics shown in Fig. 6. An AD converter 138 fetches the galvanomirror position signal GPOS, which is used to form an offset signal GPOF for zeroing the galvanomirror position signal GPOS. The offset signal GPOF is supplied to the offset adder 136 through a DA converter 140. The adder 136 adds the offset signal GPOF to the galvanomirror position signal GPOS. The phase compensation circuit 30-1 carries out phase advancing compensation for increasing a gain of a high band portion of a servo band of the signal. The servo switch SW2 is turned ON when a seek operation with the write beam is started, and OFF when the seek operation with the write beam is completed. Namely, during the seek operation with the write beam, the servo switch SW2 is turned ON to enable the galvanomirror position lock loop.

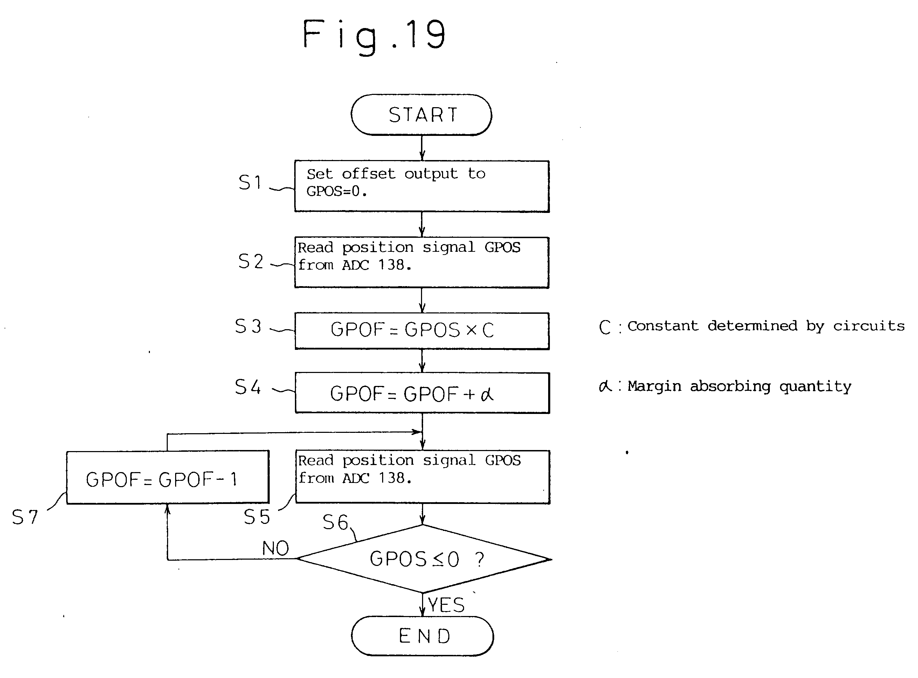

A galvanomirror offset adjusting process carried out by the processor (MPU) 32 of Fig. 18 according to the invention will be explained with reference to a flowchart of Fig. 19.

The galvanomirror offset adjusting process of Fig. 19 is carried out when the optical disk unit is activated or before a retry operation due to an access error.

Firstly, Step S1 (the word "Step" will be omitted hereinafter) is an initialization step for resetting offset data to the DA converter 140 and zero the offset signal GPOF to the offset adder 136. Under this galvanomirror offset adjusting state, the servo switch SW1 is turned OFF, and the servo switch SW2 ON, so that only the galvanomirror position lock loop is active.

S2 converts the galvanomirror position signal GPOS presently provided by the galvanomirror position detector 24 into digital data through the AD converter 138. S3 multiplies the read galvanomirror position signal GPOS by a constant C determined by circuits, i.e., resolutions of the AD converter 138 and DA converter 140, to provide the offset signal GPOF. S4 adds a value α for absorbing a margin to the offset signal GPOF, and provides the result to the offset adder 136 through the DA converter 140. According to the offset signal GPOF, the galvanomirror position lock loop drives the galvanomirror 20 to remove the offset, i.e., to zero the galvanomirror position signal GPOS.

Under the offset adjusted state, S5 reads the galvanomirror position signal GPOS through the AD converter 138. S6 checks whether or not the galvanomirror position signal GPOS is below zero. If the offset signal GPOF provided in S4 is proper, the galvanomirror position signal GPOS at this time is zero or slightly below zero. Then, the galvanomirror offset adjusting process is terminated. If the galvanomirror position signal GPOS is larger than zero, S7 decreases the galvanomirror offset signal GPOF by one, S5 again reads the galvanomirror position signal GPOS, and S6 checks to see whether or not the signal is below zero. S7, S5, and S6 are repeated until the galvanomirror position signal becomes lower than zero.

In this way, the galvanomirror position locking servo loop of Fig. 19 operates to lock the position of the galvanomirror such that the galvanomirror position signal GPOS provided by the position detector 24 is zeroed.

Accordingly, during a seek operation with the write beam, the galvanomirror for the read beam is always locked, by adding an offset, at a position where the galvanomirror position signal GPOS is zero. When the position of the galvanomirror is locked, the write beam and read beam are positioned on the same track, so that, when the seek operation with the write beam is completed, i.e., when the write beam is moved by the lens actuator to a target track, the read beam is always on the same track as the write beam. This prevents the read beam from deviating from the write beam due to the operation of the galvanomirror position lock loop, and positions the write and read beams on the target track with a single access operation.

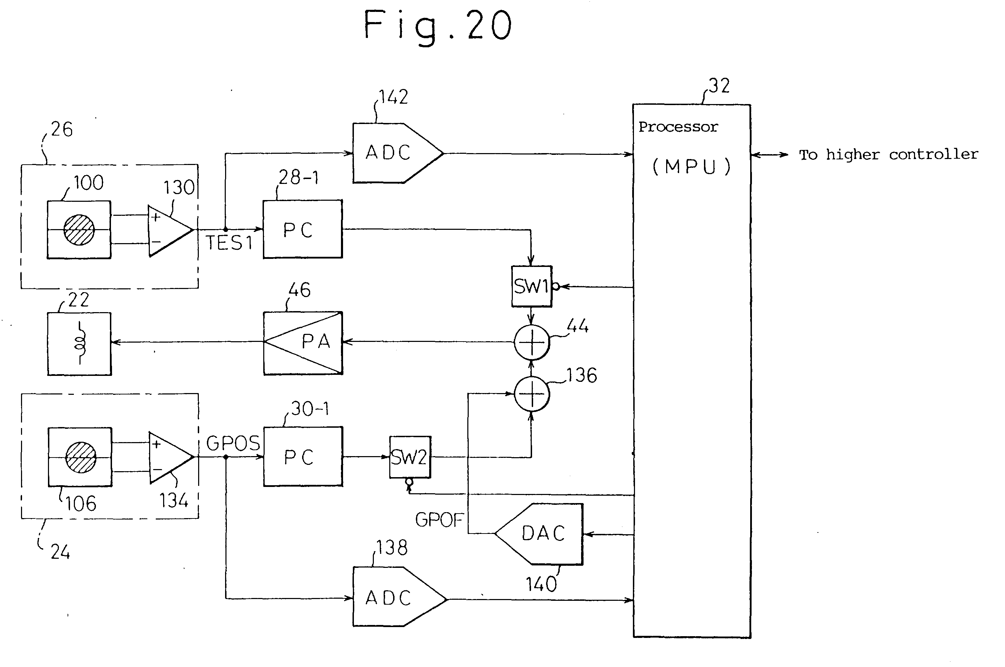

Figure 20 is a schematic view showing another embodiment of the invention of Fig. 17. According to this embodiment, the adder 136 of the galvanomirror position lock loop is disposed on an output side of the servo switch SW2. Other arrangements of this embodiment are the same as those of the embodiment of Fig. 18.

When the offset adder 136 is disposed on the output side of the servo switch SW2 as shown in Fig. 20, an offset is added to the galvanomirror position signal GPOS in a similar manner to the galvanomirror offset adjusting process of Fig. 19. In addition, it is possible to carry out relative position control for positioning the read beam at a position shifted by a predetermined number of tracks from the write beam. Namely, an offset quantity for moving the write beam for one track width is obtained in advance, and when a higher controller provides an instruction to access different tracks with the write and read beams, respectively, a track difference between the target tracks of the write and read beams is multiplied by a unit digital quantity for moving the read beam for one track width, to provide an offset signal. The offset signal is supplied to the offset adder 136 through the DA converter 140. Then, according to the seek operation with the write beam, the read beam is moved to its target track that is separated away from the write beam's target track by the predetermined relative quantity. This is applicable for the case of seeking a track only with the read beam without moving the write beam. In this case, the number of tracks crossed by the read beam is detected by the processor 32 according to the number of zero crossings of the tracking error signal TES1 of the read beam received through an AD converter 142.

The medium employed by the above embodiments is the magneto-optic disk. This invention is also applicable for an optical disk that records data by forming physical pits.

As explained above, this aspect of the invention positions a read beam on the same track as a write beam in accordance with a seek operation with the write beam, even if a galvanomirror has a mechanical offset. The invention eliminates a deviation of the read beam due to a galvanomirror position lock loop during the seek operation, abolishes a corrective seek operation for the read beam after the completion of the seek operation, and shortens an access time of the two-beam system.

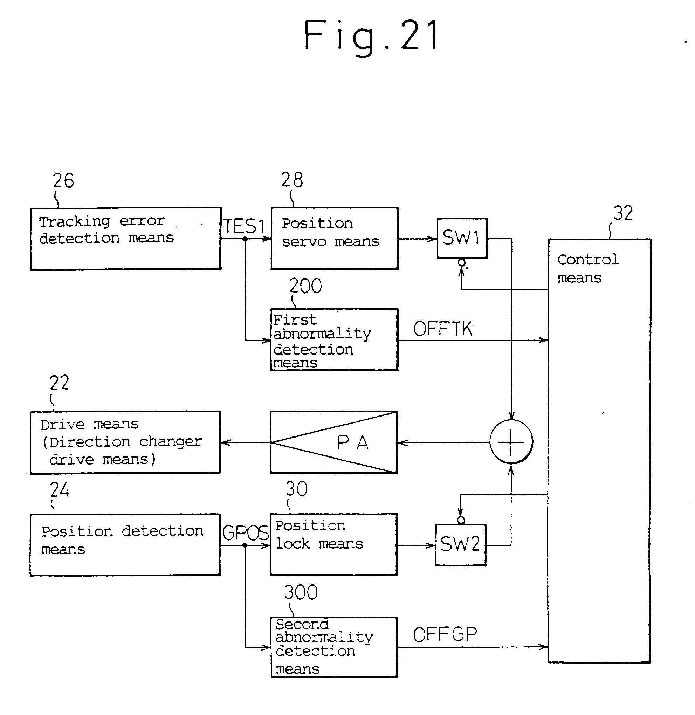

Still another aspect of the invention shown in Fig. 21 will be explained. Before the explanation, the problems of the conventional arrangement will be further explained with reference to Figs. 15 and 16. As shown in the figures, this conventional arrangement disables the position lock loop and carries out the position servo control to trace a track with the read beam according to the tracking error signal TES1. If the position servo system malfunctions at this moment, the galvanomirror 20 may be greatly deflected. If the galvanomirror 20 is greatly deflected, the amplitude of the tracking error signal TES1, which is formed from a beam reflected by the galvanomirror 20, is zeroed, so that it will be impossible to distinguish the malfunction from a normal tracking state.

To solve the problem, an object of this aspect of the invention is to detect an abnormal deflection of the galvanomirror due to a malfunction of the tracking control servo system for the read beam and properly deals with the abnormality.

Figure 21 is an explanatory view showing a principle of this aspect of the invention. This aspect is characterized by first abnormality detection means 200 for detecting an abnormality in the tracking error signal TES1 and notifying control means 32 of the abnormality, and second abnormality detection means 300 for detecting an abnormality in the position signal GPOS and notifying the control means 32 of the abnormality.

When receiving the abnormality notices from the first and second abnormality detection means 200 and 300, the control means 32 turns OFF a first servo switch SW1 to disable the tracking control of a read beam 12, and ON the second servo switch SW2 thereafter, to carry out position lock control for forcibly returning a galvanomirror 20 to a predetermined position.

The first and second abnormality detection means 200 and 300 have window comparators for providing abnormality detected outputs when signal amplitudes exceed positive and negative threshold levels.

The beam control system for the optical disk unit according to this aspect of the invention having the above arrangement carries out tracking control with the read beam by driving the galvanomirror through position servo control according to the tracking error signal. At this time, if the position servo system malfunctions to abnormally deflect the galvanomirror, the galvanomirror position signal GPOS increases to a limit value, so that the abnormality becomes detectable. At the same time, the tracking error signal greatly falls due to the abnormal deflection of the galvanomirror, so that this abnormality also becomes detectable. Then, according to the abnormalities in both the signals, it is recognized that the galvanomirror is abnormally deflected due to the malfunction of the position servo.

After recognizing the abnormal deflection of the galvanomirror, the tracking control by the position servo system is disabled, and the position lock control by the position lock loop is enabled to forcibly return the galvanomirror to its neutral position, thereby recovering from the abnormality.

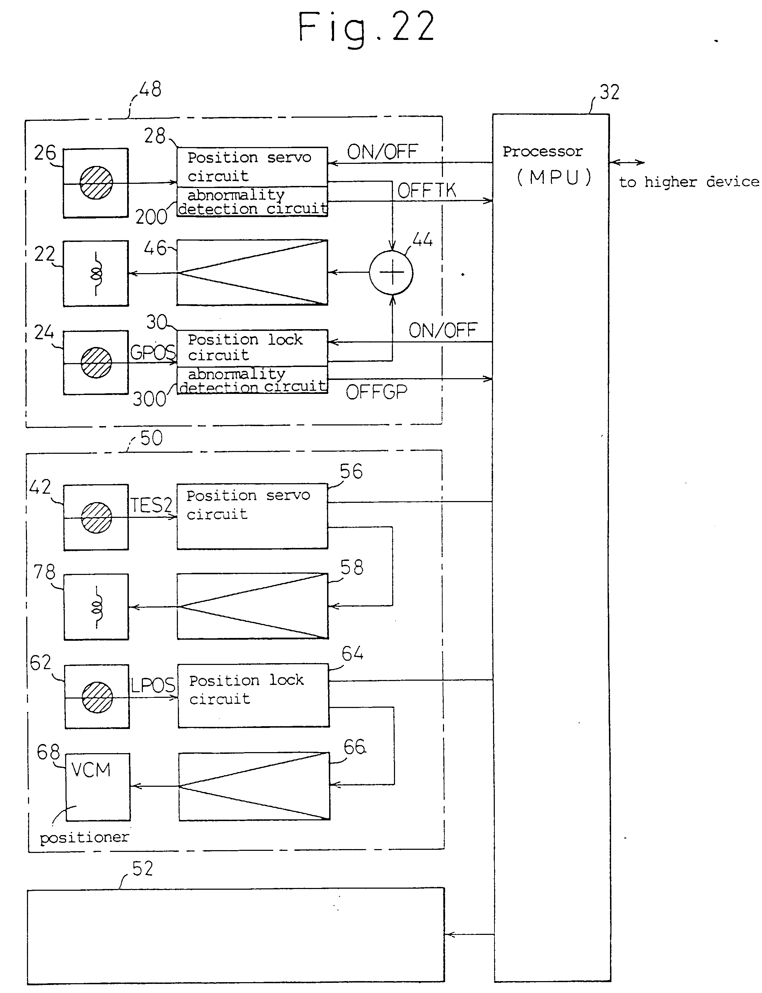

Figure 22 is a general schematic view showing beam position control of the invention of Fig. 21. Among beam position control portions shown in the figure, an object of this invention is read beam position control by a read beam control portion 48. Since an immediate read operation is carried out during a write operation, the invention includes simultaneous control of a read beam 12 and a write beam 14.

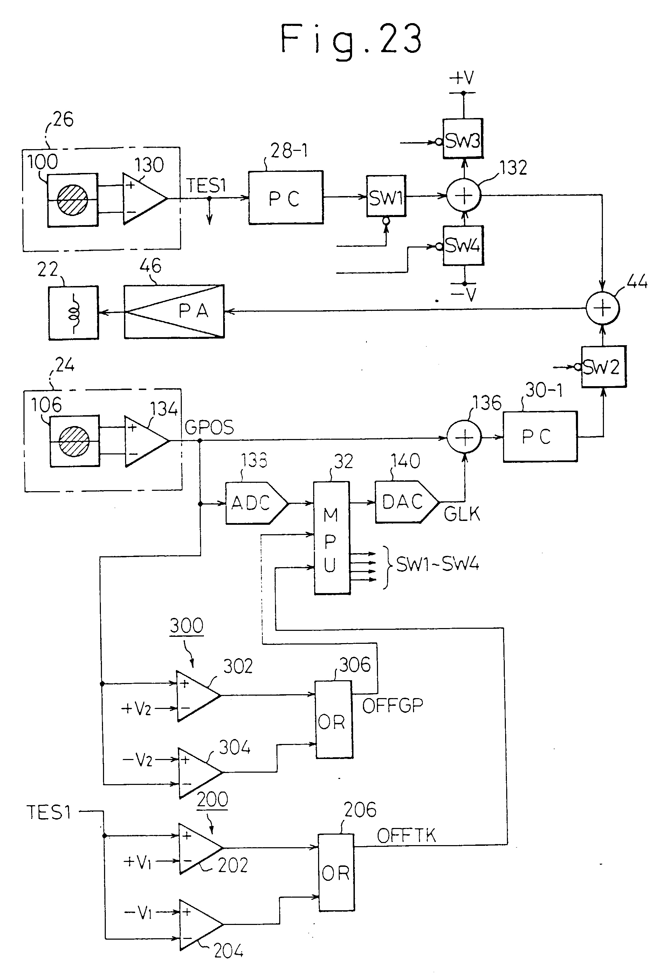

Figure 23 is a schematic view showing an embodiment of the read beam control portion according to the invention of Fig. 22.

In Fig. 23, a position servo loop for carrying out the tracking control of the read beam comprises a tracking error detector 26, a phase compensation circuit (PC circuit) 28-1 included in a position servo circuit 28 of Fig. 22, a servo switch SW1, an adder 132, an adder 44, a power amplifier 46, and an actuator coil 22 of a galvanomirror. The tracking error detector 26 has a two-piece photosensor 100 and a subtracter 130, which detect a tracking error signal TES1 from a return beam of the write beam according to the push-pull method (far field method). In the push-pull method, two light receiving portions of the two-piece photosensor 100 that are symmetrically disposed on each side of a track center detect a beam reflected and diffracted by a guide groove on a disk, and provide two outputs. The method provides a difference of the outputs as the tracking error signal TES1. The phase compensation circuit 28-1 is included in the position servo circuit 28 corresponding to the position servo means 28 of Fig. 21. The circuit 28-1 carries out phase advancing compensation to increase a high-band gain of a servo band of the tracking error signal TES1. The servo switch SW1 is turned ON by a control processor 32 when the tracking control is carried out, and OFF when the tracking control is disabled to carry out, for example, a track jump operation.

The adder 132 disposed after the servo switch SW1 is used when the write beam is jumped across tracks according to open loop control with the position servo loop being OFF. Namely, the adder 132 receives a forward seek control voltage +V through a servo switch SW3 and a reverse seek control voltage -V through a servo switch SW4. More precisely, the adder is used for jumping only the read beam across tracks without moving the write beam.

A position lock loop for locking the galvanomirror 20 at a neutral position comprises the position detector 24, an adder 136, a phase compensation circuit 30-1 included in a position lock circuit 30 of Fig. 22, a servo switch SW2, the adder 44, the power amplifier 46, and the actuator coil 22. The galvanomirror position detector 24 has a two-piece photosensor 106 and a subtracter 134, to provide a galvanomirror position signal GPOS having characteristics shown in Fig. 6. The phase compensation circuit 30-1 carries out phase advancing compensation for increasing a gain of a high band portion of a servo band of the signal. The servo switch SW2 is turned ON and OFF by the processor 32. When the position servo loop according to the tracking error signal TES1 is OFF, the servo switch SW2 is turned ON to activate the position lock loop for maintaining the galvanomirror 20 at the neutral position. Namely, during a track jump operation, the servo switch SW2 is turned ON to enable the position lock loop.

The galvanomirror position signal GPOS from the position detector 24 is provided to an AD converter 138, so that the processor 32 can receive the galvanomirror position signal GPOS. The processor 32 provides offset data to a DA converter 140, so that an offset signal GLK is added to the galvanomirror position signal GPOS through the adder 136. Namely, while the position servo loop is carrying out tracking control of the read beam according to the tracking error signal, the processor 32 fetches the presently obtained galvanomirror position signal GPOS from the AD converter 138, and provides offset data for zeroing the galvanomirror position signal GPOS to the DA converter 140, so that the adder 136 adds the offset signal GLK to the galvanomirror position signal GPOS. This conversion of the galvanomirror position signal GPOS by adding the offset signal thereto makes a zero point of the tracking error signal TES1 agree with that of the galvanomirror position signal GPOS.

Further, the invention provides the first abnormality detection circuit 200 for detecting an abnormality in the tracking error signal TES1, and the second abnormality detection circuit 300 for detecting an abnormality in the galvanomirror position signal GPOS.

The first abnormality detection circuit 200 has a window comparator comprising a comparator 202 set with a threshold voltage of +V1 and a comparator 204 set with a threshold voltage of -V1. Outputs of the comparators 202 and 204 are collected by an OR gate 206 to provide an abnormality detected signal OFFTK.

Similarly, the second abnormality detection circuit 300 has a window comparator comprising a comparator 302 set with a threshold voltage of +V2 and a comparator 304 set with a threshold voltage of -V2. Outputs of the comparators 302 and 304 are collected by an OR gate 306 to provide the processor 32 with an abnormality detected signal OFFGP.

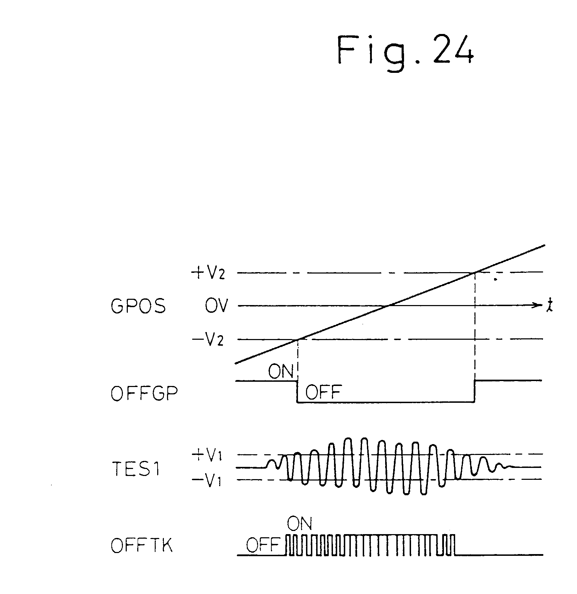

Figure 24 shows signal waveforms at various portions of the embodiment of Fig. 23 with the galvanomirror being turned at a constant speed from one maximum turn position to the other maximum turn position.

The galvanomirror position signal GPOS linearly changes from a negative side toward a positive side according to a change of time t. This galvanomirror position signal GPOS is provided to the second abnormality detection circuit 300. When it is within the threshold voltage ±V2 of the comparators 302 and 304, the abnormality detected signal OFFGP from the OR gate 306 is OFF. When it exceeds the range of ±V2, the abnormality detected signal OFFGP becomes ON.

As the galvanomirror moves away from its neutral position where the galvanomirror position signal GPOS is zero, the tracking error signal TES1 reduces its amplitude even under the same track error state and finally becomes zero. When the amplitude of the tracking error signal TES1 following the movement of the galvanomirror 20 is within the threshold voltage of ±V1 set in the comparators 202 and 204 of the first abnormality detection circuit 200 of Fig. 8, the OR gate 206 provides an ON pulse whose pulse width corresponds to the waveform of the signal. When the signal amplitude decreases into the range of ±V1, the output of the OR gate 206 changes to, for example, off level.

The processor 32 monitors the two abnormality detected signals OFFTK and OFFGP from the first and second abnormality detection circuits 200 and 300. If the two abnormality detected signals are each valid (abnormality detected state), it determines that the galvanomirror 20 has been abnormally deflected, and notifies a display panel or a higher controller of the abnormal deflection of the galvanomirror 20.

After determining the abnormal deflection of the galvanomirror 20, the processor 32 turns OFF the servo switch SW1 to disable the position servo loop for carrying out the tracking control of the read beam, and ON the servo switch SW2 to enable the position lock loop for the galvanomirror, thereby forcibly returning the galvanomirror 20 from the abnormally deflected position to the neutral position.

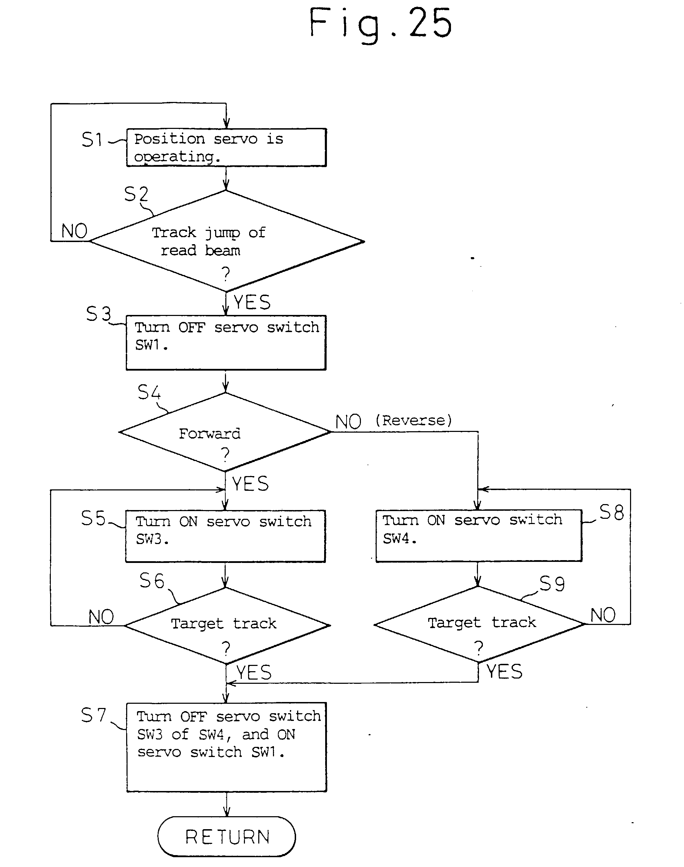

Figure 25 is a flowchart showing an example of write beam position control carried out by the processor 32 according to the embodiment of Fig. 23. In this example, a seek instruction is provided during the tracking control of the read beam, to jump only the read beam across tracks.

Firstly, Step S1 (hereinafter, the word "Step" will be omitted) turns ON the servo switch SW1 and OFF the servo switch SW2 to enable the position servo loop for carrying out tracking control according to the tracking error signal TES1. Under this state, S2 monitors a track jump instruction for the read beam alone. If there is the track jump instruction for the read beam, S3 turns OFF the servo switch SW1 to disable the position servo control according to the tracking error signal TES1. S4 checks to see whether the track jump is in a forward direction or in a reverse direction. If it is in the forward direction, S5 turns ON the servo switch SW3 to forcibly add a control signal of +V to the position servo loop through the adder 132, thereby driving the galvanomirror 20 through open loop control to move the read beam to a target track. S6 checks to see whether or not the read beam has reached the target track. Namely, S6 finds the number of tracks crossed by the beam according to the number of zero crossings of the tracking error signal TES1 of the read beam, and determines that the read beam has reached the target track when a difference relative to the target track becomes zero. When S6 determines that the beam has reached the target track, S7 turns OFF the servo switch SW2 and ON the servo switch SW1 to start the position servo loop for carrying out the tracking control according to the tracking error signal TES1.

On the other hand, when S4 determines that the track jump is in the reverse direction, S8 turns ON the servo switch SW4 to start open loop control with the reverse control signal -V for driving the galvanomirror 20. When S9 determines that the beam has reached a target track, S7 turns OFF the servo switch SW4 and ON the servo switch SW1 to start the position servo loop for carrying out the tracking control according to the tracking error signal TES1.

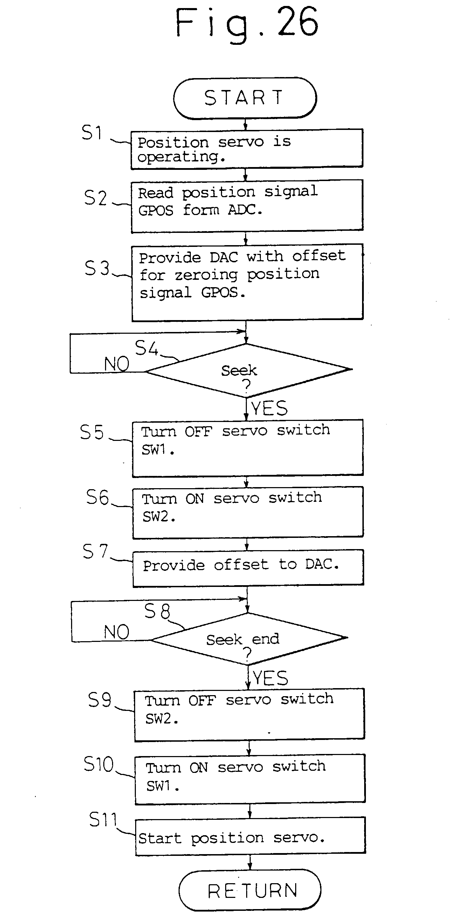

Figure 26 is a flowchart showing another example of the beam position control of the invention. This example carries out beam position control with use of the functions of the AD converter 138, DA converter 140, and adder 136 of the position lock loop of Fig. 23.

In Fig. 26, S1 is activating the position servo loop for carrying out the tracking control according to the tracking error signal TES1 with the servo switch SW1 being ON and SW2 OFF. Under this state, S2 makes the processor 32 read the galvanomirror position signal GPOS through the AD converter 138. S3 provides offset data to the DA converter 140, which provides the offset signal GLK to the adder 136 so that the galvanomirror position signal GPOS provided from the adder 136 is zeroed.

S4 checks to see whether or not there is an instruction to carry out a seek operation with the write beam. If there is the instruction of the seek operation with the write beam, S5 turns OFF the servo switch SW1, and S6 turns ON the servo switch SW2. Namely, the position servo loop according to the tracking error signal TES1 is disabled and the position lock loop according to the galvanomirror position signal GPOS enabled during the seek operation. With the galvanomirror 20 being kept substantially at the same position as when the position servo being ON, the lens actuator is driven to carry out the seek operation with the write beam. During this seek operation, S7 of the invention sets the offset data obtained in S2 and S3 into the DA converter 140, so that the adder 136 adds the same to the position lock loop. Accordingly, the position of the galvanomirror 20 is locked to an offset state according to the offset signal GLK during the seek operation.

When S8 determines that the seek operation with the write beam has been completed, S9 turns OFF the servo switch SW2, and S10 turns ON the servo switch SW1. Then, S11 starts the position servo loop for carrying out the tracking control according to the tracking error signal TES1.

According to the beam position control of Fig. 26, the offset signal for zeroing the galvanomirror position signal GPOS used for the tracking control is applied to the position lock loop during the seek operation with the write beam, so that the galvanomirror is offset to a zero point position of the tracking error signal. Accordingly, the position servo loop according to the tracking error signal of the read beam is enabled after the completion of the seek operation of the write beam, and the read beam is positioned on a target track at an accuracy of within about one fourth of a track according to the offset control by the position lock loop. As a result, the servo control can be correctly carried out under an on-track state after the completion of the seek operation.

Other than the position control of the read beam by driving the galvanomirror 20 with a combination of the position servo loop and position lock loop shown in Figs. 25 and 26, the position of the beam may be controlled by a proper combination of two servo loops.

As explained above, this aspect of the invention provides an optical disk unit that surely detects a read beam control abnormality such as an abnormal deflection of a galvanomirror, to thereby improve reliability.

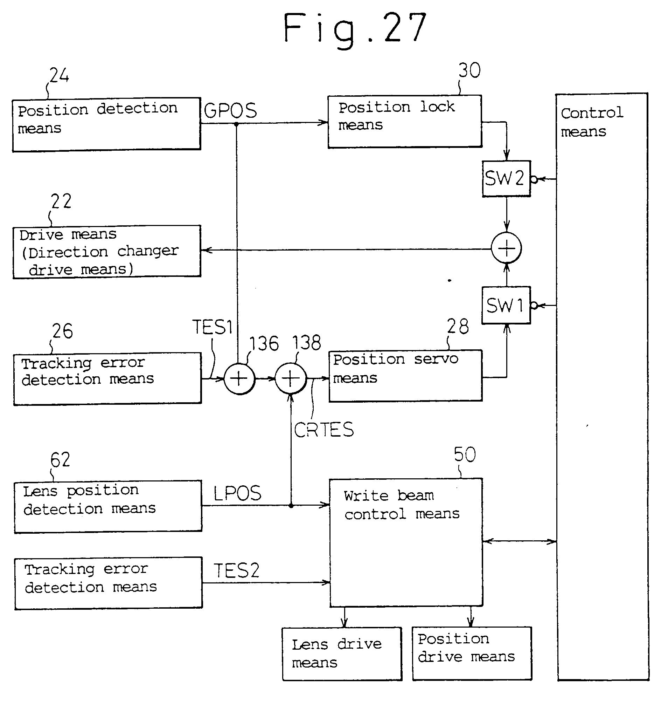

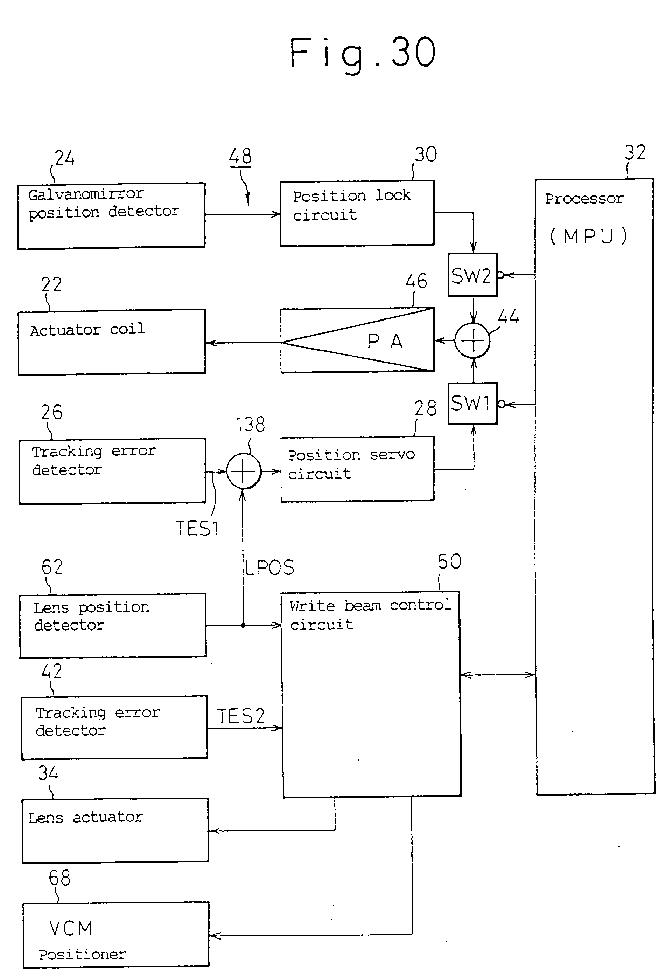

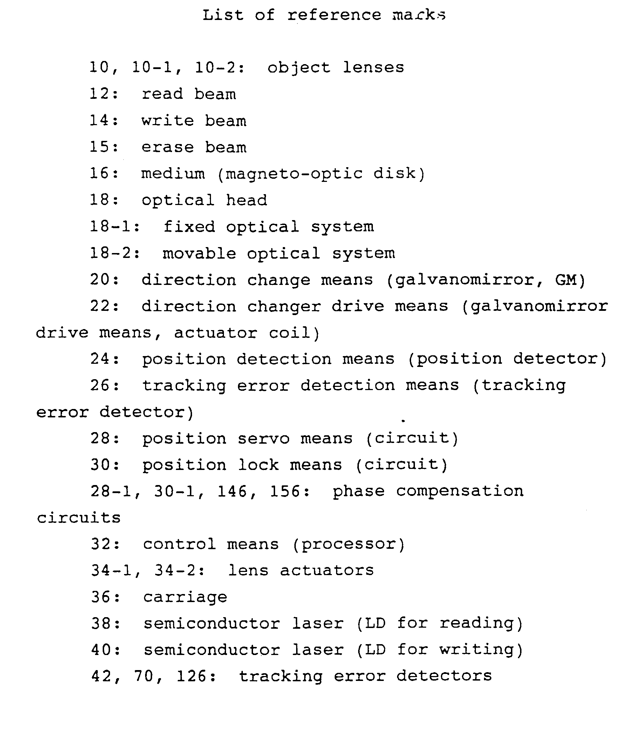

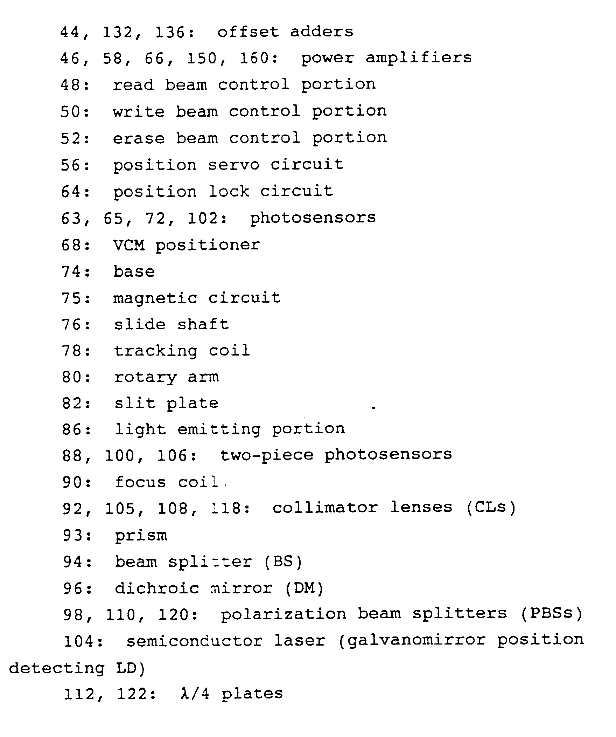

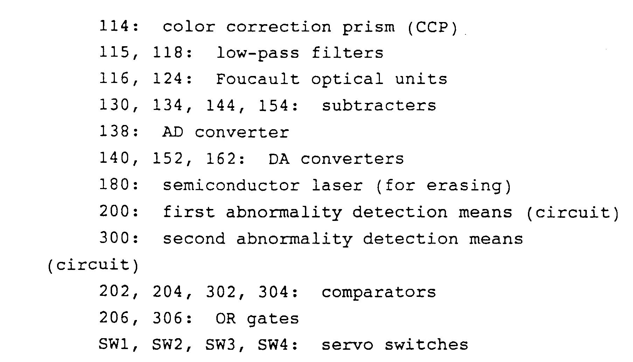

Lastly, still another aspect of the invention shown in Fig. 27 will be explained. Before the explanation, the problems of the conventional arrangement will be further explained with reference to Figs. 15 and 30. Figure 30 is a schematic view showing the conventional two-beam control system. In Fig. 30, a read beam control portion 48 includes a position servo loop for carrying out tracking control of a read beam 12 according to a tracking error signal TES1. This loop comprises a tracking error detector 26, a position servo circuit 28, an adder 44, a power amplifier 46, and an actuator coil 22.

A galvanomirror position lock loop for keeping the galvanomirror 20 at its neutral position according to the position signal of the galvanomirror 20 comprises a position detector 24, a position lock circuit 30, the adder 44, the power amplifier 46, and the actuator coil 22. This loop locks the galvanomirror 20 at the neutral position (a zero point position of the signal GPOS) even if there is disturbing vibration during a seek operation with the read beam 12.

A write beam control circuit 50 carries out tracking control of the write beam 14 by driving the lens actuator 34 according to a tracking error signal TES2 from the tracking error detector 42, a seek operation with the write beam by driving the lens actuator 34 or a VCM positioner 68, and lens position lock control for keeping the lens actuator 34 at its neutral position according to a lens position signal LPOS from a lens position detector 62.

The tracking error detector 26 detects the tracking error signal TES1 from a return beam of the read beam according to the push-pull method. The light receiving portions of the two-piece photosensor of the detector 26 are symmetrically arranged on each side of a track center. When the lens actuator 34 turns the object lens 10 from its neutral position, the symmetry of the two-piece photosensor with respect to the track center is broken to cause an offset in the tracking error signal TES1. As shown in Fig. 30, this offset may be corrected by the offset correction adder 138 for adding the lens position signal LPOS from the lens position detector 62.

A deflection of the galvanomirror 20 also causes an offset in the tracking error signal TES1. This offset is fairly larger than the offset caused by the lens actuator 34. When the read beam 12 is moved across several tracks independently of the write beam 14, the offset due to the deflection of the galvanomirror 20 may cause the read beam 12 to be off-track.

To solve the problem of the prior art, an object of this aspect of the invention is to remove an offset in the read beam due to a deflection of the galvanomirror, thereby improving tracking reliability.

Figure 27 is an explanatory view showing a principle of this aspect of the invention.

This aspect of the invention is applicable for an optical disk unit having lens position detection means 62 for detecting a position signal LPOS of an object lens 10; and write beam control means 50 for driving the lens and/or a positioner according to a tracking error detection signal TES2 of a write beam 14 and the lens position signal LPOS, to control the position of the write beam 14. A read beam control system according to the invention for such an optical disk unit comprises first offset correction means 136 for adding a galvanomirror position signal GPOS to a tracking error signal TES1 of a read beam 12.

Second correction means 138 may be disposed for adding the write beam lens position signal LPOS to the output of the first offset correction means 136. The main beam 14 is a write beam, and the subbeam 12 is a read beam.

The read beam control system according to the invention for the optical disk unit surely removes an offset caused in the tracking error signal of the subbeam due to a deflection of the galvanomirror, to surely prevent an off-track of the subbeam when the subbeam is moved by the galvanomirror to a position a required number of tracks away from the write beam.

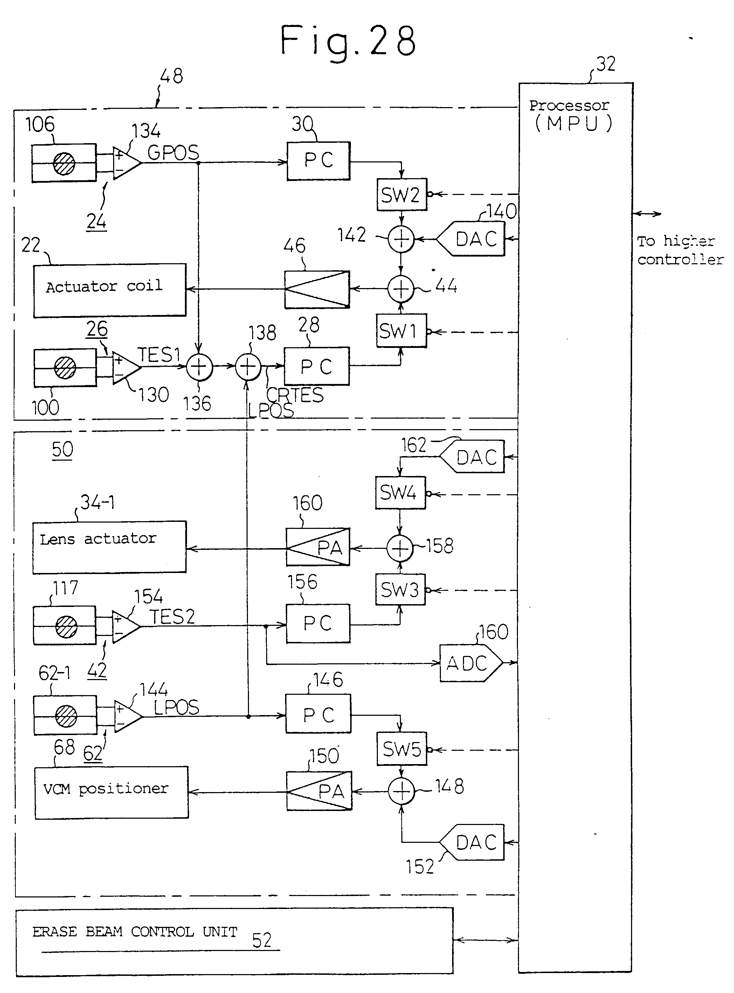

Figure 28 is a schematic view showing an optical disk unit having an arrangement for correcting an offset of the tracking error signal TES1 obtained from the read beam according to the invention.

The embodiment of Fig. 28 uses the write beam, read beam, and an erase beam. For these beams, there are arranged a read beam control portion 48, a write beam control portion 50, and an erase beam control portion 52, respectively.

The read beam control portion 48 includes a position servo loop for carrying out tracking control of the read beam 12, and a galvanomirror position lock loop for holding the galvanomirror 20 at a neutral position, the galvanomirror serving as beam direction change means for changing and controlling the position of the read beam.

The position servo loop for carrying out the tracking control of the read beam comprises a tracking error detector 26, a first offset correction adder 136, a second offset correction adder 138, a phase compensation circuit (PC circuit) 28, a servo switch SW1, an adder 44, a power amplifier 46, and the actuator coil 22. Here, the actuator coil 22 corresponds to the galvanomirror drive means serving as the direction changer drive means shown in the principle view of Fig. 27.

The tracking error detector 26 comprises a two-piece photosensor 100 and a subtracter 130, and provides the tracking error signal TES1 from a return beam of the write beam according to the far field method. A galvanomirror position signal GPOS to be explained later is supplied to the first offset correction adder 136. A lens position signal LPOS from the write beam control portion 50 is supplied to the second offset correction adder 138. The phase compensation circuit 28 increases the gain of a high-band region of a servo band, to carry out advancing phase compensation. The servo switch SW1 is turned ON at the time of tracking control of the read beam, and OFF at the time of a seek operation of the beam.

The galvanomirror position lock loop for holding the galvanomirror 20 at its neutral position comprises the position detector 24, a phase compensation circuit 30, a servo switch SW2, an adder 142, the adder 44, the power amplifier 46, and the actuator coil 22. The position detector 24 comprises a two-piece photosensor 106 and a subtracter 134, and provides the galvanomirror position signal GPOS having characteristics shown in Fig. 6. The servo switch SW2 is turned ON at the time of the tracking control, and OFF at the time of the seek operation. An output of a DA converter 140 is applied to the adder 142, which provides, for example, an offset signal for positioning the read beam at a different position from the write beam.

The write beam control portion 50 has a position servo loop for carrying out tracking control of the write beam by a lens actuator 34-1, and a position lock loop for holding the lens actuator at its neutral position by driving a VCM positioner 68.

The position servo loop for carrying out the tracking control of the write beam comprises the tracking error detector 42, a phase compensation circuit 156, a servo switch SW3, an adder 158, a power amplifier 160, and the lens actuator 34-1. The tracking error detector 42 comprises a two-piece photosensor 117 and a subtracter 154, and detects a tracking error signal TES2 from a return beam of the write beam 14 according to the push-pull method. The servo switch SW3 is turned ON at the time of the tracking control of the write beam, and OFF at the time of a seek operation of the beam. An output of a DA converter 162 for a lens seek operation is applied to the adder 158 through a servo switch SW4. Namely, at the time of the lens seek operation, the servo switch SW3 is turned OFF and the servo switch SW4 ON, and the processor 32 provides a lens seek signal to the lens actuator 34-1 through the DA converter 162, to carry out the lens seek operation by controlling a speed.

The position lock loop (double servo) carried out with the VCM positioner 68 for maintaining the lens actuator at the neutral position comprises the lens position detector 62, a phase compensation circuit 146, a servo switch SW5, an adder 148, a power amplifier 150, and the VCM positioner 68. The lens position detector 62 comprises a two-piece photosensor 62-1 and a subtracter 144, and provides the lens position signal LPOS having similar characteristics to the signal shown in Fig. 6. The servo switch SW5 is turned ON at the time of tracking control, and OFF at the time of a seek operation. An output of a DA converter 152 is supplied to the adder 148. The DA converter 152 is used for a positioner seek operation. At the time of the positioner seek operation, the servo switch SW5 is turned OFF, and the processor 32 provides the VCM positioner 68 with a positioner seek signal through the DA converter 152, to carry out the positioner seek operation.

A lens actuator 34-2 used exclusively for the erase beam in the erase beam control portion 52 is provided with the same control system as that for the lens actuator 34-1 of the write beam control portion 50.

As is apparent in the embodiment of Fig. 28, the first offset correction adder 136 adds the galvanomirror position signal GPOS from the galvanomirror position detector 24 to the tracking error signal from the tracking error detector 26 of the read beam control portion 48, to remove an offset in the tracking error signal TES1 caused by a deflection of the galvanomirror 20.

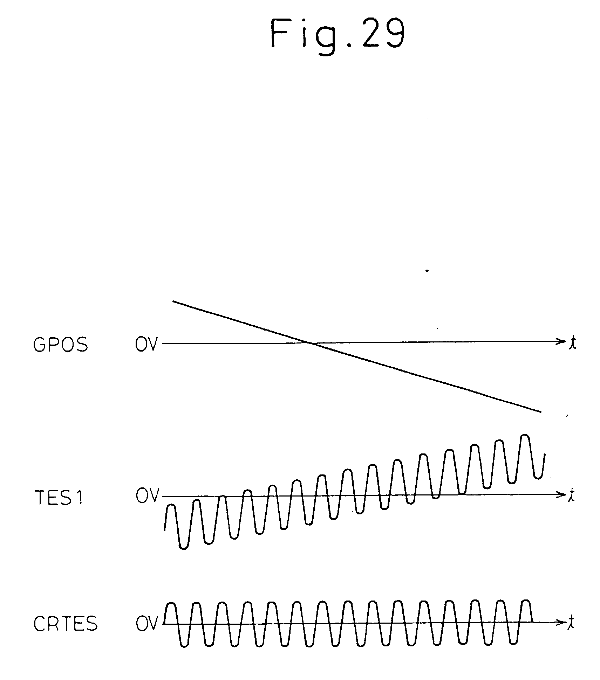

Figure 29 explains an offset process with the galvanomirror 20 being turned at a constant speed for a given time. The figure shows the galvanomirror position signal GPOS, tracking error detected signal TES1, and a corrected tracking error detected signal CRTES.

In Fig. 29, the galvanomirror position signal GPOS is zero at the neutral position of the galvanomirror 20. At this position, an offset in the tracking error signal TES1 is substantially zero. When the galvanomirror 20 is deflected so that the galvanomirror position signal GPOS is changed linearly from a positive side to a negative side, an offset of the tracking error signal RTES changes opposite to the change in the galvanomirror position signal GPOS.

Accordingly, the first offset correction adder 136 of Fig. 28 of the invention adds the galvanomirror position signal GPOS to the tracking error signal TES1, to provide the offset corrected signal CRTES from which the offset caused by the deflection of the galvanomirror has been removed.

According to the embodiment of Fig. 28, the second offset correction adder 138 adds the lens position signal LPOS of the lens actuator 34-1 detected by the lens position detector 62, to remove an offset of the offset error detected signal TES1 of the read beam caused by a rotational movement of the lens actuator 34-1, i.e., the object lens 10-1.

The invention is not limited to the embodiment of Fig. 28. A system having at least the means for adding the galvanomirror position signal GPOS to the tracking error signal TES1 of the read beam, to correct an offset caused by a deflection of the galvanomirror 20 is applicable as it is for an optical disk unit of optional configuration.

The medium employed by the above embodiments is the magneto-optic disk. This invention is also applicable for an optical disk that records data by forming physical pits.

As explained above, this aspect of the invention can carry out tracking control of a read beam by deflecting a galvanomirror while removing an offset in a tracking error signal caused by the deflection of the galvanomirror by adding a galvanomirror position signal to the tracking error signal, thereby preventing an off-track of the read beam and improving reliability.

CAPABILITY OF EXPLOITATION IN INDUSTRY

A beam control system of an optical disk unit according to the invention employs a galvanomirror for independently carrying out tracking control of a read beam or a write beam, when passing the write and read beams through a single object lens to irradiate a medium with the beams to simultaneously write and read the medium. This system is applicable for various industrial fields.

## Claims

1. A beam position control system of an optical disk unit, comprising:

   means for generating a write beam (14) and a read beam (12) directed to a medium by a lens (10);
   an optical head (18) for writing and reading data to and from a medium (16) with beams;
   lens drive means (34) for driving an object lens (10) to simultaneously move said beams across tracks of the medium;
   first tracking error detection means (42) for providing a first tracking error signal of the write beam;
   direction changer drive means (22) for driving a direction change means (20) to move the read beam across the tracks of the medium;
   position detection means (24) for detecting the position of the direction change means (20) and providing a position signal (GPOS) ; and
   second tracking error detection means (26) for detecting a tracking error of the read beam and providing a second tracking error signal (TES1) according to a read beam returned from the medium;
   position servo means (28) generating a first drive signal to drive the direction change means (20) according to the tracking error signal;
   position lock means (30) generating a second drive signal for driving and locking the direction change means (20) to a predetermined position according to the position signal (GPOS) ; and
   means for summing the first and second drive signals; characterised by
   a first servo switch (SW1) for starting and stopping the first drive signal;
   a second servo switch (SW2) for starting and stopping the second drive signal; and
   control means (32) for turning ON and OFF the first and second servo switches (SW1, SW2) according to a beam position control status, thereby enabling one of the position servo operation and the position lock operation, both of the position servo operation and the position lock operation, or neither of the position servo operation and the position lock operation.

2. A beam position control system of an optical disk unit according to claim 1, wherein the control means (32) turns OFF the first servo switch (SW1) to disable the position servo operation, and turns ON the second servo switch (SW2) to enable the position lock operation.

3. A beam position control system of an optical disk unit according to claim 1, wherein, when a seek operation with the read beam is completed and the beam is set on a target track, the control means (32) turns ON the first and second servo switches (SW1, SW2) to enable both the position servo operation and position lock operation, and after the beam is set on the target track, turns OFF the second servo switch (SW2) to enable only the position servo operation.

4. A beam position control system of an optical disk unit according to claim 1, wherein, when only the write beam (14) is jumped across tracks during the position servo operation of the read beam (12), the control means (32) turns OFF the servo switch (SW1) until the jump is completed, to disable both the position servo operation of the read beam (12) and the position lock operation and leave the direction change means (20) uncontrolled.

5. A beam position control system of an optical disk unit according to claim 1, further comprising a third servo switch (SW3) for applying a forward drive signal (+V) to the direction changer means (22) and a fourth servo switch (SW4) for applying a reverse drive signal (-V) to the same, wherein:

the control means (32) turns OFF the servo switch (SW1), when only the read beam (12) is jumped across tracks during the position servo operation of the read beam (12), to disable both the position servo operation and position lock operation, and controls the third servo switch (SW3) or the fourth servo switch (SW4).

6. A beam position control system of an optical disk unit according to claim 1, wherein the control means (32):

turns ON the servo switch (SW1) to carry out the position servo operation of the read beam (12), fetches, during this operation, the position signal (GPOS) from the position detection means (24), and finds an offset signal (GLK) for zeroing the position signal (GPOS);
turns OFF the servo switch (SW1), when only the write beam (14) is jumped across tracks, to disable the position servo operation of the read beam (12) until the jump is completed, and at the same time, applies the offset signal (GLK) to lock the direction change means (20) at an offset state; and
turns OFF the second servo switch (SW2) and ON the first servo switch (SW1) after the completion of the track jump, to resume the position servo operation.

7. A beam position control system of an optical disk unit according to claim 1, further comprising a third servo switch (SW3) for applying a forward drive signal (+V) to the direction changer drive means (22) and a fourth servo switch (SW4) for applying a reverse drive signal (-V) to the same, wherein, when a higher device provides the control means (32) with a seek instruction indicating differences for positional deviations of the read beam (12) and write beam (14) with the difference of the write beam (14) specified in the seek instruction being zero:

the control means turns OFF the servo switch (SW1) to disable both the position servo operation of the read beam (12) and the position lock operation, and, controls the third servo switch (SW3) or the fourth servo switch (SW4).

8. A beam position control system of an optical disk unit according to claim 1, wherein, when a higher device provides the control means (32) with a seek instruction indicating differences for positional deviations of the read beam (12) and write beam (14) with the difference for the write beam (14) specified in the seek instruction being not zero, the control means (32):

fetches the position signal (GPOS) from the position detection means (24) during the position servo operation of the read beam (12) with the servo switch (SW1) being ON, finds an offset signal with which the position signal (GPOS) is unchanged under a position locked state, and adds an offset corresponding to a difference between the read beam (12) and the write beam (14) to the offset signal to form an offset signal (GLK) for a new lock position;
turns OFF the servo switch (SW1) to disable the position servo operation of the read beam (12) during a track jump of the write beam (14), and applies the offset signal (GLK) to lock the position of the direction change means (20) at an offset state; and
turns OFF the second servo switch (SW2) after the completion of the track jump, and ON the first servo switch (SW1) to resume the position servo operation.

9. A beam position control system according to claim 1, wherein said direction change means (20) is a galvanomirror for moving only the read beam (12); and further comprising offset addition means (136) for adding an offset signal (GPOF) to the position signal (GPOS) provided by the position detection means (24); wherein said control means (32) are arranged for turning ON the servo switch (SW2) to enable the position lock control of the galvanomirror when the unit is energized or retried, reading the position signal (GPOS), finding the offset signal (GPOF) for zeroing the position signal (GPOS), and providing the offset signal to the offset addition means (136) during a seek operation with the write beam (14).

10. A beam position control system according to claim 1, further comprising:

> first abnormality detection means (200) for detecting an abnormality in the tracking error signal (TES1) and notifying the control means (32) of the abnormality; and
> second abnormality detection means (300) for detecting an abnormality in the position signal (GPOS) of the direction change means (20) and notifying the control means (32) of the abnormality.

11. A beam position control system of an optical disk unit according to claim 10, wherein, when receiving abnormality notifications from the first and second abnormality detection means (200, 300), the control means (32) turns OFF the first servo switch (SW1) to disable the tracking control of the beam, and ON the second servo switch (SW2) thereafter, to carry out position lock control for returning the direction change means (20) to a predetermined position.

12. A beam position control system of an optical disk unit according to claim 10, wherein the first and second abnormality detection means (200, 300) have window comparators for providing abnormality detected outputs when signal amplitudes exceed positive and negative threshold levels.

13. A beam position control system according to claim 1, wherein said beam position control system further comprises;

> lens position detection means (62) for detecting a position signal (LPOS) of the object lens (10); first offset correction means (136) for adding the galvanomirror position signal (GPOS) to the tracking error signal (RTES) of the read beam (12).

14. A beam position control system of an optical disk unit according to claim 13, further comprising second correction means (138) for adding the lens position signal (LPOS) for the write beam to the output of the first offset correction means (136).

**Patentansprüche**

1. Strahl-Positionssteuersystem einer optischen Platteneinheit, mit:

> einer Einrichtung zum Erzeugen eines Schreibstrahls (14) und eines Lesestrahls (12), die durch eine Linse (10) auf ein Medium gerichtet werden;
einem optischen Kopf (18) zum Schreiben und Lesen von Daten auf und aus einem Medium (16) mit Strahlen;
einer Linsen-Treibereinrichtung (34) zum Treiben einer Objektivlinse (10), um gleichzeitig die Strahlen quer über Spuren des Mediums zu bewegen;
einer ersten Spurfehler-Detektionseinrichtung (42) zum Vorsehen eines ersten Spurfehlersignals des Schreibstrahls;
einer Richtungsänderungs-Treibereinrichtung (22) zum Treiben einer Richtungsänderungseinrichtung (20), um den Lesestrahl quer über die Spuren des Mediums zu bewegen;
einer Positionsdetektionseinrichtung (24) zum Detektieren der Position der Richtungsänderungseinrichtung (20) und Vorsehen eines Positionssignals (GPOS); und
einer zweiten Spurfehler-Detektionseinrichtung (26) zum Detektieren eines Spurfehlers des Lesestrahls und Vorsehen eines zweiten Spurfehlersignals (TES1) gemäß einem vom Medium zurückgeführten Lesestrahl;
einer Positions-Servoeinrichtung (28), die ein erstes Treibersignal zum Treiben der Richtungsänderungseinrichtung (20) gemäß dem Spurfehlersignal erzeugt;
einer Positionsverriegelungseinrichtung (30), die ein zweites Treibersignal zum Treiben und Verriegeln der Richtungsänderungseinrichtung (20) in einer vorherbestimmten Position gemäß dem zweiten Positionssignal (GPOS) erzeugt; und
einer Einrichtung zum Summieren des ersten und zweiten Treibersignals; gekennzeichnet durch:
einen ersten Servoschalter (SW1) zum Starten und Stoppen des ersten Treibersignals;
einen zweiten Servoschalter (SW2) zum Starten und Stoppen des zweiten Treibersignals; und
eine Steuereinrichtung (32) zum EIN und AUS Schalten des ersten und zweiten Servoschalters (SW1, SW2) gemäß einem Strahl-Positionssteuerstatus, wodurch eine der Positions-Servooperation und der Positionsverriegelungsoperation, sowohl die Positions-Servooperation als auch die Positionsverriegelungsoperation, oder keine der Positions-Servooperation und der Positionsverriegelungsoperation freigegeben wird.

2. Strahl-Positionssteuersystem einer optischen Platteneinheit nach Anspruch 1, bei welchem die Steuereinrichtung (32) den ersten Servoschalter (SW1) AUS schaltet, um die Positions-Servooperation zu sperren, und den zweiten Servoschalter (SW2) EIN schaltet, um die Positionsverriegelungsoperation freizugeben.

3. Strahl-Positionssteuersystem einer optischen Platteneinheit nach Anspruch 1, bei welchem, wenn eine Suchoperation mit dem Lesestrahl vollendet ist, und der Strahl auf eine Zielspur gesetzt wird, die Steuereinrichtung (32) den ersten und zweiten Servoschalter (SW1, SW2) EIN schaltet, um sowohl die Positions-Servooperation als auch die Positionsverriegelungsoperation freizugeben, und nachdem der Strahl auf die Zielspur gesetzt wird, den zweiten Servoschalter (SW2) AUS schaltet, um nur die Positions-Servooperation freizugeben.

4. Strahl-Positionssteuersystem einer optischen Platteneinheit nach Anspruch 1, bei welchem, wenn nur der Schreibstrahl (14) während der Positions-Servooperation des Lesestrahls (12) quer über Spuren springt, die Steuereinrichtung (32) den Servoschalter (SW1) AUS schaltet, bis der Sprung vollendet ist, um sowohl die Positions-Servooperation des Lesestrahls (12) als auch die Positionsverriegelungsoperation zu sperren, und die Richtungsänderungseinrichtung (20) ungesteuert zu lassen.

5. Strahl-Positionssteuersystem einer optischen Platteneinheit nach Anspruch 1, ferner mit einem dritten Servoschalter (SW3) zum Anlegen eines Vorwärts-Treibersignals (+V) an die Richtungsänderungseinrichtung (22), und einem vierten Servoschalter (SW4) zum Anlegen eines Rückwärts-Treibersignals (-V) an dieselbe, bei welchem:

die Steuereinrichtung (32) den Servoschalter (SW1) AUS schaltet, wenn nur der Lesestrahl (12) während der Positions-Servooperation des Lesestrahls (12) quer über Spuren springt, um sowohl die Positions-Servooperation als auch die Positionsverriegelungsoperation zu sperren, und den dritten Servoschalter (SW3) oder den vierten Servoschalter (SW4) steuert.

6. Strahl-Positionssteuersystem einer optischen Platteneinheit nach Anspruch 1, bei welchem die Steuereinrichtung (32):

den Servoschalter (SW1) EIN schaltet, um die Positions-Servooperation des Lesestrahls (12) durchzuführen, während dieser Operation das Positionssignal (GPOS) aus der Positionsdetektionseinrichtung (24) abruft, und ein Versetzungssignal (GLK) zum Nullsetzen des Positionssignals (GPOS) findet; den Servoschalter (SW1) AUS schaltet, wenn nur der Schreibstrahl (14) quer über Spuren springt, um die Positions-Servooperation des Lesestrahls (12) zu sperren, bis der Sprung vollendet ist, und gleichzeitig das Versetzungssignal (GLK) anlegt, um die Richtungsänderungseinrichtung (20) in einem Versetzungszustand zu verriegeln; und nach der Vollendung des Spursprungs den zweiten Servoschalter (SW2) AUS und den ersten Servoschalter (SW1) EIN schaltet, um die Positions-Servooperation wiederaufzunehmen.

7. Strahl-Positionssteuersystem einer optischen Platteneinheit nach Anspruch 1, ferner mit einem dritten Servoschalter (SW3) zum Anlegen eines Vorwärts-Treibersignals (+V) an die Richtungsänderungs-Treibereinrichtung (22), und einem vierten Servoschalter (SW4) zum Anlegen eines Rückwärts-Treibersignals (-V) an dieselbe, bei welchem, wenn eine höhere Anordnung der Steuereinrichtung (32) eine Suchinstruktion zuführt, die Differenzen für Positionsabweichungen des Lesestrahls (12) und Schreibstrahls (14) angibt, wobei die in der Suchinstruktion spezifizierte Differenz des Schreibstrahls (14) Null ist:

die Steuereinrichtung den Servoschalter (SW1) AUS schaltet, um sowohl die Positions-Servooperation des Lesestrahls (12) als auch die Positionsverriegelungsoperation zu sperren, und den dritten Servoschalter (SW3) oder den vierten Servoschalter (SW4) steuert.

8. Strahl-Positionssteuersystem einer optischen Platteneinheit nach Anspruch 1, bei welchem, wenn eine höhere Anordnung der Steuereinrichtung (32) eine Suchinstruktion zuführt, die Differenzen für Positionsabweichungen des Lesestrahls (12) und Schreibstrahls (14) angibt, wobei die in der Suchinstruktion spezifizierte Differenz des Schreibstrahls (14) nicht Null ist, die Steuereinrichtung (32):

das Positionssignal (GPOS) aus der Positionsdetektionseinrichtung (24) während der Positions-Servooperation des Lesestrahls (12) abruft, wobei der Servoschalter (SW1) EIN ist, ein Versetzungssignal findet, mit dem das Positionssignal (GPOS) in einem Positionsverriegelungszustand unverändert ist, und eine Versetzung, die einer Differenz zwischen dem Lesestrahl (12) und dem Schreibstrahl (14) entspricht, mit dem Versetzungssignal addiert, um ein Versetzungssignal (GLK) für eine neue Verriegelungsposition zu bilden; den Servoschalter (SW1) AUS schaltet, um die Positions-Servooperation des Lesestrahls (12) während eines Spursprungs des Schreibstrahls (14) zu sperren, und das Versetzungssignal (GLK) anlegt, um die Position der Richtungsänderungseinrichtung(20) in einem Versetzungszustand zu verriegeln; und nach der Vollendung des Spursprungs den zweiten Servoschalter (SW2) AUS schaltet, und den ersten Servoschalter (SW1) EIN schaltet, um die Positions-Servooperation wiederaufzunehmen.

9. Strahl-Positionssteuersystem nach Anspruch 1, bei welchem die Richtungsänderungseinrichtung (20) ein Galvanospiegel zum Bewegen nur des Lesestrahls (12) ist;

und ferner mit einer Versetzungsadditionseinrichtung (136) zum Addieren eines Versetzungssignals (GPOF) mit dem Positionssignal (GPOS), das von der Positionsdetektionseinrichtung (24) vorgesehen wird; bei welchem die Steuereinrichtung (32) eingerichtet ist, den Servoschalter (SW2) EIN zu schalten, um die Positionsverriegelungssteuerung des Galvanospiegels freizugeben, wenn die Einheit mit Energie versorgt oder neu gestartet wird, das Positionssignal (GPOS) zu lesen, das Versetzungssignal (GPOF) zu finden, um das Positionssignal (GPOS) auf Null zu setzen, und das Versetzungssignal der Versetzungsadditionseinrichtung (136) während einer Suchoperation mit dem Schreibstrahl (14) zuzuführen.

10. Strahl-Positionssteuersystem nach Anspruch 1, ferner mit:

einer ersten Abnormalitätsdetektionseinrichtung (200) zum Detektieren einer Abnormalität im Spurfehlersignal (TES1) und Benachrichtigen der Steuereinrichtung (32) über die Abnormalität; und
einer zweiten Abnormalitätsdetektionseinrichtung (300) zum Detektieren einer Abnormalität im Positionssignal (GPOS) der Richtungsänderungseinrichtung (20) und Benachrichtigen der Steuereinrichtung (32) über die Abnormalität.

11. Strahl-Positionssteuersystem einer optischen Platteneinheit nach Anspruch 10, bei welchem beim Empfang von Abnormalitätsbenachrichtigungen von der ersten und zweiten Abnormalitätsdetektionseinrichtung (200, 300) die Steuereinrichtung (32) den ersten Servoschalter (SW1) AUS, um die Spursteuerung des Strahls zu sperren, und danach den zweiten Servoschalter (SW2) EIN schaltet, um die Positionsverriegelungssteuerung zum Rückführen der Richtungsänderungseinrichtung (20) zu einer vorherbestimmten Position durchzuführen.

12. Strahl-Positionssteuersystem einer optischen Platteneinheit nach Anspruch 10, bei welchem die erste und zweite Abnormalitätsdetektionseinrichtung (200, 300) Fensterkomparatoren aufweisen, um Abnormalitätsdetektionsausgänge vorzusehen, wenn Signalamplituden positive und negative Schwellenwerte überschreiten.

13. Strahl-Positionssteuersystem nach Anspruch 1, wobei das Strahl-Positionssteuersystem ferner umfaßt:

eine Linsen-Positionsdetektionseinrichtung (62) zum Detektieren eines Positionssignals (LPOS) der Objektivlinse (10);
eine erste Versetzungskorrektureinrichtung (136) zum Addieren des Galvanospiegel-Positionssignals (GPOS) mit dem Spurfehlersignal (RTES) des Lesestrahls (12).

14. Strahl-Positionssteuersystem einer optischen Platteneinheit nach Anspruch 13, ferner mit einer zweiten Korrektureinrichtung (138) zum Addieren des Linsen-Positionssignals (LPOS) für den Schreibstrahl mit dem Ausgang der ersten Versetzungskorrektureinrichtung (136).

**Revendications**

1. Système de commande de position de faisceau d'une unité de disque optique, comprenant :

un moyen pour générer un faisceau d'écriture (14) et un faisceau de lecture (12) dirigés sur un support par une lentille (10) ;
une tête optique (18) pour écrire et lire des données de et sur un support (16) avec des faisceaux ;
un moyen de commande de lentille (34) pour commander une lentille d'objet (10) pour déplacer simultanément lesdits faisceau à travers des pistes du support ;
un premier moyen de détection d'erreur de suivi de piste (42) pour fournir un premier signal d'erreur de suivi de piste du faisceau d'écriture ;
un moyen de commande de changeur de direction (22) pour commander un moyen de changement de direction (20) pour déplacer le faisceau de lecture à travers les pistes du support ;
un moyen de détection de position (24) pour détecter la position du moyen de changement de direction (20) et pour fournir un signal de position (GPOS) ; et
un second moyen de détection d'erreur de suivi de piste (26) pour détecter une erreur de suivi de piste du faisceau de lecture et pour fournir un second signal d'erreur de suivi de piste (TES1) selon un faisceau de lecture revenu du support ;
un moyen d'asservissement de position (28) générant un premier signal de commande pour commander le moyen de changement de direction (20) selon le signal d'erreur de suivi de piste ;

un moyen de verrouillage de position (30) générant un second signal de commande pour commander et verrouiller le moyen de changement de direction (20) sur une position prédéterminée selon le signal de position (GPOS) ; et

un moyen pour additionner les premier et second signaux de commande ; caractérisé par un premier commutateur d'asservissement (SW1) pour commencer et arrêter le premier signal de commande ;

un second commutateur d'asservissement (SW2) pour commencer et arrêter le second signal de commande ; et

un moyen de commande (32) pour fermer et ouvrir les premier et second commutateurs d'asservissement (SW1, SW2) selon un état de commande de position de faisceau, permettant ainsi une opération de l'opération d'asservissement de position et de l'opération de verrouillage de position, les deux opérations de l'opération d'asservissement de position et l'opération de verrouillage de position, ou aucune opération de l'opération d'asservissement de position et de l'opération de verrouillage de position.

2. Système de commande de position de faisceau d'une unité de disque optique selon la revendication 1, dans lequel le moyen de commande (32) ouvre le premier commutateur d'asservissement (SW1) pour invalider l'opération d'asservissement de position, et ferme le second commutateur d'asservissement (SW2) pour valider l'opération de verrouillage de position.

3. Système de commande de position de faisceau d'une unité de disque optique selon la revendication 1, dans lequel, lorsqu'une opération de recherche avec le faisceau de lecture est terminée et le faisceau est réglé sur une piste cible, le moyen de commande (32) ferme les premier et second commutateurs d'asservissement (SW1, SW2) pour valider à la fois l'opération d'asservissement de position et l'opération de verrouillage de position, et après que le faisceau soit réglé sur la piste cible, ouvre le second commutateur d'asservissement (SW2) pour ne valider que l'opération d'asservissement de position.

4. Système de commande de position de faisceau d'une unité de disque optique selon la revendication 1, dans lequel, lorsque seulement le faisceau d'écriture (14) saute à travers des pistes pendant l'opération d'asservissement de position du faisceau de lecture (12), le moyen de commande (32) ouvre le commutateur d'asservissement (SW1) jusqu'à ce que le saut soit terminé, pour invalider à la fois l'opération d'asservissement de position du faisceau de lecture (12) et l'opération de verrouillage de position, et laisse le moyen de changement de direction (20) non commandé.

5. Système de commande de position de faisceau d'une unité de disque optique selon la revendication 1, comprenant en outre un troisième commutateur d'asservissement (SW3) pour appliquer un signal de commande continu (+V) au moyen d'un changeur de direction (22) et un quatrième commutateur d'asservissement (SW4) pour lui appliquer un signal de commande opposée (-V) à celui-ci, dans lequel :

le moyen de commande (32) ouvre le commutateur d'asservissement (SW1), lorsque seulement le faisceau de lecture (12) saute à travers des pistes pendant l'opération d'asservissement de position du faisceau de lecture (12), pour invalider à la fois l'opération d'asservissement de position et l'opération de verrouillage de position, et commande le troisième commutateur d'asservissement (SW3) ou le quatrième commutateur d'asservissement (SW4).

6. Système de commande de position de faisceaux d'une unité de disque optique selon la revendication 1, dans lequel le moyen de commande (32) :

ferme le commutateur d'asservissement (SW1) pour réaliser l'opération d'asservissement de position du faisceau de lecture (12), cherche, pendant cette opération, le signal de position (GPOS) du moyen de détection de position (24), et trouve un signal de décalage (GLK) pour mettre à zéro le signal de position (GPOS) ;

ouvre le commutateur d'asservissement (SW1), lorsque seulement le faisceau d'écriture (14) saute à travers des pistes, pour invalider l'opération d'asservissement de position du faisceau de lecture (12) jusqu'à ce que le saut soit terminé, et en même temps, applique le signal de décalage (GLK) pour verrouiller le moyen de changement de direction (20) dans un état de décalage ; et

ouvre le second commutateur d'asservissement (SW2) et ferme le premier commutateur d'asservissement (SW1) après l'achèvement du saut de piste, pour reprendre l'opération d'asservissement de position.

7. Système de commande de position de faisceau d'une unité de disque optique selon la revendication 1, comprenant en outre un troisième commutateur d'asservissement (SW3) pour appliquer un signal de commande continu (+V) au moyen de commande de changeur de direction (22) et un quatrième commutateur d'asservissement (SW4) pour lui appliquer un signal de commande opposé (-V) à celui-ci, dans lequel, lorsqu'un dispositif supérieur fournit le moyen de commande (32) avec une instruction de recherche indiquant des différences de déviations positionnelles du faisceau de lecture (12) et du faisceau d'écriture (14), la différence du faisceau d'écriture (14) spécifiée dans l'instruction de recherche étant nulle ;

le moyen de commande ouvre le commutateur d'asservissement (SW1) pour invalider à la fois l'opération d'asservissement de position du faisceau de lecture (12) et l'opération de verrouillage de position, et commande le troisième commutateur d'asservissement (SW3) ou le quatrième commutateur d'asservissement (SW4).

8. Système de commande de position de faisceau d'une unité de disque optique selon la revendication 1, dans lequel, lorsqu'un dispositif supérieur fournit le moyen de commande (32) avec une instruction de recherche indiquant des différences de déviations positionnelles du faisceau de lecture (12) et du faisceau d'écriture (14), la différence de faisceau d'écriture (14) spécifiée dans l'instruction de recherche étant non nulle, le moyen de commande (32) :

cherche le signal de position (GPOS) du moyen de détection de position (24) pendant l'opération d'asservissement de position du faisceau de lecture (12) le commutateur d'asservissement (SW1) étant fermé, trouve un signal de décalage avec lequel le signal de position (GPOS) est inchangé sous un état verrouillé de position, et additionne un décalage correspondant à une différence entre le faisceau de lecture (12) et le faisceau d'écriture (14) au signal de décalage pour former un signal de décalage (GLK) pour une nouvelle position de verrouillage ;
ouvre le commutateur d'asservissement (SW1) pour invalider l'opération d'asservissement de position du faisceau de lecture (12) pendant un saut de piste du faisceau d'écriture (14), et applique le signal de décalage (GLK) pour verrouiller la position du moyen de changement de direction (20) à un état de décalage ; et
ouvre le second commutateur d'asservissement (SW2) après l'achèvement du saut de piste, et ferme le premier commutateur d'asservissement (SW1) pour reprendre l'opération d'asservissement de position.

9. Système de commande de position de faisceau selon la revendication 1, dans lequel ledit moyen de changement de direction (20) est un miroir galvanique pour ne déplacer que le faisceau de lecture (12) ;

et comprenant en outre un moyen d'addition de décalage (136) pour additionner un signal de décalage (GPOF) au signal de position (GPOS) fourni par le moyen de détection de position (24) ; dans lequel lesdits moyens de commande (32) sont disposés pour fermer le commutateur d'asservissement (SW2) pour valider la commande de verrouillage de position du miroir galvanique lorsque l'unité est mise sous tension et réessayée, pour lire le signal de position (GPOS), pour trouver le signal de décalage (GPOF) pour mettre à zéro le signal de position (GPOS), et pour fournir le signal de décalage au moyen d'addition de décalage (136) pendant une opération de recherche avec le faisceau d'écriture (14).

10. Système de commande de position de faisceau selon la revendication 1, comprenant en outre :

un premier moyen de détection d'anomalies (200) pour détecter une anomalie dans le signal d'erreur de suivi de piste (TES1) et pour notifier le moyen de commande (32) de l'anomalie ; et un second moyen de détection d'anomalies (300) pour détecter une anomalie dans le signal de position (GPOS) du moyen de changement de direction (20) et pour notifier le moyen de commande (32) de l'anomalie.

11. Système de commande de position de faisceau d'une unité de disque optique selon la revendication 10, dans lequel, lors de la réception de notification d'anomalie des premier et second moyens de détection d'anomalies (200, 300), le moyen de commande (32) ouvre le premier commutateur d'asservissement (SW1) pour invalider la commande de suivi de piste du faisceau, et ferme le second commutateur d'asservissement (SW2) ensuite, pour réaliser une commande de verrouillage de position pour renvoyer le moyen de changement de direction (20) à une position prédéterminée.

12. Système de commande de position de faisceau d'une unité de disque optique selon la revendication 10, dans lequel les premier et second moyens de détection d'anomalies (200, 300) ont des comparateurs de fenêtre pour fournir les sorties détectées d'anomalies lorsque des amplitudes de signal dépassent des niveaux de seuils positifs et négatifs.

13. Système de commande de position de faisceau selon la revendication 1, dans lequel ledit système de commande de position de faisceau comprend en outre ;

un moyen de détection de position de lentille (62) pour détecter un signal de position (LPOS) de la lentille d'objet (10) ;
un premier moyen de correction de décalage (136) pour additionner le signal de position de miroir galvanique (GPOS) au signal d'erreur de suivi de piste (RTES) du faisceau de lecture (12).

14. Système de commande de position de faisceau d'une unité de disque optique selon la revendication 13, comprenant en outre un second moyen de correction (138) pour additionner le signal de position de lentille (LPOS.) pour le faisceau d'écriture à la sortie du premier moyen de correction de décalage (136).

# Fig.1A

Fig.1B

Tracking error detection means 26

Position servo means 28

TES1

Drive means (Direction changer (drive means)) 22

PA

Position detection means 24

GPOS

Position lock means 30

offset output GLK

SW1

SW3 +V

SW4 —V

SW2

Control means 32

# Fig.2

# Fig.3

EP 0 503 096 B1

# Fig.4

# Fig.5

# Fig. 6

Galvanomirror
position signal
+GPOS

Outer ← → Inner

−GPOS

# Fig.7

ERASE BEAM CONTROL UNIT

Fig. 8

32 Processor (MPU)

+V — SW3
SW1 — 132
28-1 Phase compensation circuit
TES1
130
100
26

44
SW4 — —V
46 PA
22 Actuator coil

SW2
140 DAC
138 ADC

30-1 Phase compensation circuit
GLK
136
GPOS
134
106
24

# Fig.9

```
            ┌──────────────┐
            │   Mode  1    │
            └──────────────┘
                   │
                   ▼
          ╱─────────────────╲      NO
    S1   ╱  Position servo OFF ╲──────┐
         ╲        ?          ╱        │
          ╲─────────────────╱         │
                   │ YES              │
                   ▼                  │
    S2  ┌──────────────────┐          │
        │ Turn OFF servo   │          │
        │ switch SW1.      │          │
        └──────────────────┘          │
                   │                  │
                   ▼                  │
    S3  ┌──────────────────┐          │
        │ Turn ON servo    │          │
        │ switch SW2.      │          │
        └──────────────────┘          │
                   │                  │
                   ▼                  │
    S4  ┌──────────────────┐          │
        │ Start position   │          │
        │ lock servo.      │          │
        └──────────────────┘          │
                   │                  │
                   ▼                  │
            ┌──────────────┐          │
            │   RETURN     │          │
            └──────────────┘          │
```

# Fig.10

```
                  ┌──────────────┐
                  │    Mode  2   │
                  └──────┬───────┘
                         │ ◄──────────────┐
                         ▼                │
 S1              ╱───────────────╲        │
            ╱─────────────────────────╲  NO
           ╱     Position  servo        ╲─┘
            ╲          ?                ╱
             ╲───────────────╱
                         │ YES
                         ▼
 S2        ┌───────────────────────────┐
           │  Turn ON servo            │
           │  switch SW1.              │
           └───────────────────────────┘
                         │
                         ▼
 S3        ┌───────────────────────────┐
           │  Turn ON servo            │
           │  switch SW2.              │
           └───────────────────────────┘
                         │ ◄──────────────┐
                         ▼                │
 S4              ╱───────────────╲        │
            ╱─────────────────────────╲  NO
           ╱      Is TES within         ╲─┘
           ╲    a specified range       ╱
            ╲          ?                ╱
             ╲───────────────╱
                         │ YES
                         ▼
 S5        ┌───────────────────────────┐
           │  Turn OFF servo           │
           │  switch SW2.              │
           └───────────────────────────┘
                         │
                         ▼
                  ┌──────────────┐
                  │   RETURN     │
                  └──────────────┘
```

# Fig.11

```
                    ┌──────────────┐
                    │    Mode 3    │
                    └──────┬───────┘
                           │ ◄──────────────────┐
                           ▼                     │
        ┌────────────────────────────┐          │
   S1 ──│ Position servo             │          │
        │ is operating.              │          │
        └────────────┬───────────────┘          │
                     ▼                           │
                    ╱╲                           │
              ╱          ╲                       │
   S2 ──  ╱   Track jump of  ╲      NO           │
         ╱    write beam       ╲ ──────────────┘
          ╲        ?          ╱
              ╲          ╱
                  ╲╱
                   │ YES
                   ▼  ◄──────────────────┐
        ┌────────────────────────────┐   │
   S3 ──│ Turn OFF servo             │   │
        │ switch SW1.                │   │
        └────────────┬───────────────┘   │
                     ▼                    │
                    ╱╲                    │
              ╱          ╲                │
   S4 ──  ╱  Jump completed  ╲    NO      │
         ╱         ?          ╲ ──────────┘
          ╲                  ╱
              ╲          ╱
                  ╲╱
                   │ YES
                   ▼
        ┌────────────────────────────┐
   S5 ──│ Turn ON servo              │
        │ switch SW1.                │
        └────────────┬───────────────┘
                     ▼
              ┌──────────────┐
              │   RETURN     │
              └──────────────┘
```

# Fig.12

```
                    ┌─────────────┐
                    │   Mode 4    │
                    └──────┬──────┘
                           │
        ┌──────────────────┤
        │           ┌──────▼──────────┐
   S1 ──┤           │ Position servo  │
        │           │ is operating.   │
        │           └──────┬──────────┘
        │                  │
   S2   │          ┌───────▼────────┐
        │   NO     ╱  Track jump of  ╲
        └─────────◄   read beam       ►
                   ╲       ?         ╱
                    └───────┬────────┘
                            │ YES
                    ┌───────▼────────┐
   S3 ──────────────┤ Turn OFF servo │
                    │ switch SW1.    │
                    └───────┬────────┘
                            │
   S4            ┌──────────▼────────┐   NO (Reverse)
                 ╱     Forward        ╲─────────────────────┐
                ◄         ?             ►                    │
                 ╲                     ╱                     │
                  └──────────┬────────┘                      │
                             │ YES                           │
        ┌────────────────────┤                     ┌─────────▼──────────┐
        │          ┌─────────▼──────────┐           │ Turn ON servo switch │── S9
   S5 ──┤          │ Turn ON servo switch│          │ SW4 for an           │
        │          │ SW3 for an          │          │ acceleration period. │
        │          │ acceleration period.│          └─────────┬──────────┘
        │          └─────────┬──────────┘                     │
   S6   │          ┌─────────▼────────┐          ┌────────────▼──────┐  S10
        │   NO     ╱   Target track    ╲         ╱   Target track     ╲   NO
        └─────────◄        ?            ►        ◄        ?             ►────┐
                   ╲                   ╱          ╲                    ╱      │
                    └────────┬────────┘            └──────┬──────────┘       │
                             │ YES                        │ YES             │
                    ┌────────▼────────┐           ┌───────▼──────────┐  S11  │
   S7 ──────────────┤ Turn ON servo switch        │ Turn ON servo switch     │
                    │ SW4 for a       │           │ SW3 for a        │      │
                    │ deceleration period.        │ deceleration period.     │
                    └────────┬────────┘           └───────┬──────────┘      │
                             │                            │                 │
                    ┌────────▼────────────────────────────┘                 │
                    │
              ┌─────▼──────────────┐
   S8 ────────┤ Turn OFF servo switch
              │ SW3 or SW4, and ON  │
              │ servo switch SW1.   │
              └─────────┬──────────┘
                        │
                 ┌──────▼──────┐
                 │   RETURN    │
                 └─────────────┘
```

# Fig.13

```
           ( Mode 5 )

   ┌─────────────────────────┐  S1
   │ Position servo is operating. │
   └─────────────────────────┘

   ┌─────────────────────────┐  S2
   │ Read position signal GPOS │
   │ from ADC.                 │
   └─────────────────────────┘

   ┌─────────────────────────┐  S3
   │ Provide DAC with an offset │
   │ to equalize GPOS with a   │
   │ lock position.            │
   └─────────────────────────┘

              ◇  S4
    NO ◁─────◇ Seek ?
              ◇
              │ YES
   ┌─────────────────────────┐  S5
   │ Turn OFF servo switch SW1. │
   └─────────────────────────┘

   ┌─────────────────────────┐  S6
   │ Turn ON servo switch SW2. │
   └─────────────────────────┘

   ┌─────────────────────────┐  S7
   │ Provide DAC with an Offset. │
   └─────────────────────────┘

              ◇  S8
    NO ◁─────◇ Seek completed ?
              ◇
              │ YES
   ┌─────────────────────────┐  S9
   │ Turn OFF servo switch SW2. │
   └─────────────────────────┘

   ┌─────────────────────────┐  S10
   │ Turn ON servo switch SW1. │
   └─────────────────────────┘

   ┌─────────────────────────┐  S11
   │ Start position servo.     │
   └─────────────────────────┘

           ( RETURN )
```

# Fig.14 A

```
                    ┌─────────────┐
                    │   Mode 6    │
                    └──────┬──────┘
                           │
      ┌────────────────────┴─────────────────┐
S1 ── │ Receive a seek command indicating     │
      │ differences for positional            │
      │ deviations of write and read          │
      │ beams from a higher device.           │
      └────────────────────┬─────────────────┘
                           │
        S2                 ◇
                      Write beam       =0    NO  (Mode 6-2)
                      difference ──────────────────────┐
                           ?                            │
                           │ YES  (Mode 6-1)          ( A )
      ┌────────────────────┴─────────────────┐
S3 ── │ Turn OFF servo switch SW1.            │
      └────────────────────┬─────────────────┘
                     S4    │
              NO    ◇
         ┌──────── Forward
         │             ?
         │             │ YES
```

S9  Turn ON servo switch SW4 for an acceleration period.

S5  Turn ON servo switch SW3 for an acceleration period.

S10  Target track ?  NO / YES

S6  Target track ?  NO / YES

S11  Turn ON servo switch SW3 for a deceleration period.

S7  Turn ON servo switch SW4 for a deceleration period.

S8  Turn OFF servo switch SW3 or SW4, and ON servo switch SW1.

```
                    ┌─────────────┐
                    │   RETURN    │
                    └─────────────┘
```

# Fig.14 B

Ⓐ

S12 — Read position signal GPOS from ADC.

S13 — Provide DAC with an offset to equalize GPOS with a lock position.

S14 — Further correct the offset for a difference.

(Correction quantity)=(Track difference)

$\times$ (Digital quantity for one track movement)

S15 — Start a seek operation of write beam.

S16 — Turn OFF servo switch SW1, and ON servo switch SW2.

S17 — Seek completed ?

NO

YES

S18 — Turn OFF servo switch SW2, and ON servo switch SW1.

( RETURN )

# Fig.15

# Fig.16

# Fig.17

EP 0 503 096 B1

# Fig.18

EP 0 503 096 B1

# Fig.19

EP 0 503 096 B1

```
                    ┌─────────────┐
                    │    START    │
                    └─────────────┘
                           │
                           ▼
      S1 ─────┌────────────────────────────┐
             │ Set offset output to        │
             │ GPOS=0.                     │
             └────────────────────────────┘
                           │
                           ▼
      S2 ─────┌────────────────────────────┐
             │ Read position signal GPOS   │
             │ from ADC 138.               │
             └────────────────────────────┘
                           │
                           ▼
      S3 ─────┌────────────────────────────┐
             │      GPOF = GPOS × C        │
             └────────────────────────────┘
                           │
                           ▼
      S4 ─────┌────────────────────────────┐
             │      GPOF = GPOF + α         │
             └────────────────────────────┘
```

GPOF = GPOF - 1    Read position signal GPOS from ADC 138.

S7    S5    S6

NO    GPOS ≤ 0 ?

YES

END

C : Constant determined by circuits

α : Margin absorbing quantity

Fig.20

To higher controller

32 Processor (MPU)

142 ADC

28-1 PC

TES1

130

100

26

SW1

44

136

46 PA

22

GPOF

SW2

GPOS

30-1 PC

134

106

24

DAC 140

138 ADC

# Fig.21

26

| Tracking error detection means |
|---|

TES1

28

| Position servo means |
|---|

SW1

32

| Control means |
|---|

200

| First abnormality detection means |
|---|

OFFTK

22

| Drive means (Direction changer drive means) |
|---|

P A

24

| Position detection means |
|---|

GPOS

30

| Position lock means |
|---|

SW2

300

| Second abnormality detection means |
|---|

OFFGP

# Fig.22

# Fig.23

# Fig.24

GPOS

$+V_2$

0V

$-V_2$

t

OFFGP

ON

OFF

TES1

$+V_1$

$-V_1$

OFFTK

ON

OFF

# Fig.25

# Fig.26

```
                ┌─────────────┐
                │   START     │
                └──────┬──────┘
                       │
   S1 ┌─────────────────────────────┐
      │ Position servo is           │
      │ operating.                  │
      └──────────────┬──────────────┘
                     │
   S2 ┌─────────────────────────────┐
      │ Read position signal        │
      │ GPOS form ADC.              │
      └──────────────┬──────────────┘
                     │
   S3 ┌─────────────────────────────┐
      │ Provide DAC with offset     │
      │ for zeroing position        │
      │ signal GPOS.                │
      └──────────────┬──────────────┘
                     │
          ┌──────────┴──────────┐
   NO     S4                    │
   ◄──────◄      Seek           ►
          │       ?             │
          └──────────┬──────────┘
                     │ YES
   S5 ┌─────────────────────────────┐
      │ Turn OFF servo switch       │
      │ SW1.                        │
      └──────────────┬──────────────┘
                     │
   S6 ┌─────────────────────────────┐
      │ Turn ON servo switch        │
      │ SW2.                        │
      └──────────────┬──────────────┘
                     │
   S7 ┌─────────────────────────────┐
      │ Provide offset to DAC.      │
      └──────────────┬──────────────┘
                     │
          ┌──────────┴──────────┐
   NO     S8                    │
   ◄──────◄     Seek end        ►
          │       ?             │
          └──────────┬──────────┘
                     │ YES
   S9 ┌─────────────────────────────┐
      │ Turn OFF servo switch       │
      │ SW2.                        │
      └──────────────┬──────────────┘
                     │
  S10 ┌─────────────────────────────┐
      │ Turn ON servo switch        │
      │ SW1.                        │
      └──────────────┬──────────────┘
                     │
  S11 ┌─────────────────────────────┐
      │ Start position servo.       │
      └──────────────┬──────────────┘
                     │
                ┌────┴────────┐
                │   RETURN    │
                └─────────────┘
```

# Fig.27

# Fig.28

# Fig.29

GPOS OV ————————————→ $t$

TES 1 OV ————————————→ $t$

CRTES OV ————————————→ $t$

# Fig.30

List of reference marks

10, 10-1, 10-2:  object lenses

12:  read beam

14:  write beam

15:  erase beam

16:  medium (magneto-optic disk)

18:  optical head

18-1:  fixed optical system

18-2:  movable optical system

20:  direction change means (galvanomirror, GM)

22:  direction changer drive means (galvanomirror drive means, actuator coil)

24:  position detection means (position detector)

26:  tracking error detection means (tracking error detector)

28:  position servo means (circuit)

30:  position lock means (circuit)

28-1, 30-1, 146, 156:  phase compensation circuits

32:  control means (processor)

34-1, 34-2:  lens actuators

36:  carriage

38:  semiconductor laser (LD for reading)

40:  semiconductor laser (LD for writing)

42, 70, 126:  tracking error detectors

44, 132, 136:  offset adders

46, 58, 66, 150, 160:  power amplifiers

48:  read beam control portion

50:  write beam control portion

52:  erase beam control portion

56:  position servo circuit

64:  position lock circuit

63, 65, 72, 102:  photosensors

68:  VCM positioner

74:  base

75:  magnetic circuit

76:  slide shaft

78:  tracking coil

80:  rotary arm

82:  slit plate

86:  light emitting portion

88, 100, 106:  two-piece photosensors

90:  focus coil

92, 105, 108, 118:  collimator lenses (CLs)

93:  prism

94:  beam splitter (BS)

96:  dichroic mirror (DM)

98, 110, 120:  polarization beam splitters (PBSs)

104:  semiconductor laser (galvanomirror position detecting LD)

112, 122:  $\lambda/4$ plates

114:   color correction prism (CCP)

115, 118:   low-pass filters

116, 124:   Foucault optical units

130, 134, 144, 154:   subtracters

138:   AD converter

140, 152, 162:   DA converters

180:   semiconductor laser (for erasing)

200:   first abnormality detection means (circuit)

300:   second abnormality detection means (circuit)

202, 204, 302, 304:   comparators

206, 306:   OR gates

SW1, SW2, SW3, SW4:   servo switches